(19) **Europäisches Patentamt / European Patent Office / Office européen des brevets**

(11) **EP 4 712 626 A1**

(12) **EUROPEAN PATENT APPLICATION**
published in accordance with Art. 153(4) EPC

(43) Date of publication:
**18.03.2026   Bulletin 2026/12**

(21) Application number: **24803776.4**

(22) Date of filing: **10.05.2024**

(51) International Patent Classification (IPC):
**H04W 72/0446** *(2023.01)*     **H04B 1/7163** *(2011.01)*
**H04W 4/80** *(2018.01)*

(52) Cooperative Patent Classification (CPC):
**H04B 1/7163; H04W 4/80; H04W 72/0446**

(86) International application number:
**PCT/KR2024/006378**

(87) International publication number:
**WO 2024/232723 (14.11.2024 Gazette 2024/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:   **11.05.2023   KR 20230061178**

(71) Applicant: **LG Electronics Inc.**
**Yeongdeungpo-gu**
**Seoul 07336 (KR)**

(72) Inventors:
- **LEE, Hongwon**
  **Seoul 06772 (KR)**
- **CHOI, Jinsoo**
  **Seoul 06772 (KR)**
- **CHO, Hangyu**
  **Seoul 06772 (KR)**
- **JANG, Insun**
  **Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **METHOD AND APPARATUS FOR TRANSMISSION OR RECEPTION OF SCHEDULING INFORMATION BASED ON BLOCK/ROUND STRUCTURE IN ULTRA-WIDEBAND WIRELESS NETWORK SYSTEM**

(57)    Disclosed are a method and apparatus for the transmission or reception of scheduling information based on a block/round structure in an ultra-wideband (UWB) wireless network system. A method performed by a first device in an ultra-wideband (UWB) wireless network system according to an embodiment of the present disclosure may comprise: a step in which the first device generates a scheduling information element (IE) for scheduling in a block structure based on one or more ranging rounds; and a step of transmitting a frame including the scheduling IE to one or more second devices. Here, the scheduling IE may include: information indicating the type of scheduling based on a ranging round unit; and scheduling list information related to scheduling based on a ranging round unit for each device.

**FIG.22**

**Description**

[TECHNICAL FIELD]

The present disclosure relates to a method and device for transmitting or receiving scheduling information based on a block/round structure in an ultra-wideband wireless network system.

[BACKGROUND ART]

A low-rate (LR) wireless networks may support low data rate connectivity between fixed or mobile devices having limited battery consumption requirements. For example, a LR wireless network may be applied to a wireless personal area network (WPAN). The Institute of Electrical and Electronics Engineers (IEEE) 802.15.4 standard defines various technologies for a physical layer (PHY) and a medium access control (MAC) sublayer for a LR wireless network. For example, the IEEE 802.15.4 standard defines various modes that support precise ranging.

An ultra wideband (UWB) wireless network may support transmitting massive information at low power over a very wide band (e.g., a frequency band of 3.1GHz-10.6GHz). For example, an UWB technology may support transmitting digital sign information wirelessly by converting it into an impulse signal with a very short time duration below a nanosecond. The IEEE 802.15.4z standard defines an ultra wideband (UWB) technology related to the ranging technology. For example, the IEEE 802.15.4z standard includes a high-rate pulse frequency (HRP) PHY technology that supports high-speed data communication (e.g., 27-31 Mbps) and accurate two-way ranging and positioning, and a high-rate pulse frequency (LRP) PHY technology that supports various modes for low-speed data communication (e.g., a Radio Frequency Identification (RFID) application). Furthermore, the IEEE 802.15.4z standard includes an UWB PHY technology that refines the integrity and accuracy of ranging measurement, and a MAC technology that supports the exchange of ranging-related information between devices participating in ranging and the control of a time-of-flight (TOF) ranging procedure. Recently, the IEEE 802.15.4ab standard for the advancement of an UWB PHY/MAC including the refinement of the IEEE 802.15.4z standard-based wireless network technology is under discussion.

[Disclosure]

[Technical Problem]

A technical object of the present disclosure is to provide a method and device for transmitting or receiving scheduling information based on a block/round structure in a UWB wireless network system.
An additional technical object of the present disclosure is to provide a method and device for requesting (re) transmission of scheduling information in a UWB wireless network system.
The technical objects to be achieved by the present disclosure are not limited to the above-described technical objects, and other technical objects which are not described herein will be clearly understood by those skilled in the pertinent art from the following description.

[Technical Solution]

A method performed by a first device in an ultra wideband (UWB) wireless network system according to an aspect of the present disclosure may comprise: generating, by the first device, a scheduling information element (IE) for scheduling in a block structure based on one or more ranging rounds; and transmitting, to one or more second devices, a frame including the scheduling IE. Herein, the scheduling IE may include information indicating a type of ranging round-based scheduling and scheduling list information related to ranging round-based scheduling for each device.
A method performed by a second device in an ultra wideband (UWB) wireless network system according to an additional aspect of the present disclosure may comprise, the method comprising: receiving, from a first device, a scheduling information element (IE) for scheduling in a block structure based on one or more ranging rounds; and identifying a ranging round assigned to the second device within the block structure, based on the scheduling IE. Herein, the scheduling IE may include information indicating a type of ranging round-based scheduling and scheduling list information related to ranging round-based scheduling for each device.

[Technical Effects]

According to the present disclosure, a method and device for transmitting or receiving scheduling information based on a block/round structure in a UWB wireless network system may be provided.
According to the present disclosure, a method and device for requesting (re)transmission of scheduling information in a UWB wireless network system may be provided.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a block configuration diagram of a wireless communication device according to an embodiment of the present disclosure.

FIG. 2 is a diagram for describing a HRP UWB PPDU format to which the present disclosure may be applied.

FIG. 3 is a diagram illustrating the RMARKER position according to an STS packet configuration in an HRP-ERDEV PPDU format to which the present disclosure may be applied.

FIG. 4 is a diagram for describing two-way ranging techniques to which the present disclosure may be applied.

FIG. 5 is a diagram for describing examples of a format of a RMI IE, a RCPCS IE, a RRMC IE and a RRTI IE to which the present disclosure may be applied.

FIG. 6 shows an example of a message sequence chart for SS-TWR applying a deferred reply time result to which the present disclosure may be applied.

FIG. 7 shows an example of a message sequence chart for SS-TWR applying an embedded reply time result to which the present disclosure may be applied.

FIG. 8 shows an example of a message sequence chart for SS-TWR using a SP3 packet to which the present disclosure may be applied.

FIG. 9 shows an example of a message sequence chart for DS-TWR to which deferred reply time information to which the present disclosure may be applied is applied.

FIG. 10 shows an example of a message sequence chart for DS-TWR to which embedded ranging time information to which the present disclosure may be applied is applied.

FIG. 11 is a diagram for describing the role of a device in a ranging procedure to which the present disclosure may be applied.

FIG. 12 shows examples of ARC IE, RDM IE, RBU IE, RR IE and SRRE IE formats to which the present disclosure may be applied.

FIG. 13 is a diagram for describing a ranging block structure and a ranging phase to which the present disclosure may be applied.

FIG. 14 shows examples of a timing diagram for various multi-device ranging to which the present disclosure may be applied.

FIG. 15 shows a timing diagram in an example of a block-based mode to which the present disclosure may be applied.

FIG. 16 is a diagram for describing examples of various transmission offsets to which the present disclosure may be applied.

FIG. 17 shows an example of a message sequence chart for one-to-many SS-TWR to which the present disclosure may be applied.

FIG. 18 shows an example of a message sequence chart for SP3 one-to-many SS-TWR to which the present disclosure may be applied.

FIG. 19 illustrates the format of a scheduling information element (IE) to which the present disclosure may be applied.

FIG. 20 illustrates the format of a scheduling list element according to the value of the scheduling list type field to which the present disclosure may be applied.

FIG. 21 is a diagram illustrating the difference in time structures for a single application and a combination of multiple applications to which the present disclosure may be applied.

FIG. 22 is a diagram illustrating the operation of a first device according to the present disclosure.

FIG. 23 is a diagram illustrating the operation of a second device according to the present disclosure.

FIG. 24 illustrates an example of a time structure in a hyper block-based mode according to the present disclosure.

FIG. 25 is a diagram illustrating an example of an HBS IE format according to the present disclosure.

FIG. 26 is a diagram illustrating an example of a scheduling list element format related to block scheduling according to an embodiment of the present disclosure.

FIG. 27 is a diagram illustrating another example of a scheduling information element (IE) format according to the present disclosure.

FIG. 28 is a diagram illustrating an example of a scheduling list element format based on address indexing according to the present disclosure.

FIG. 29 is a diagram illustrating an example of an operation of a controlee based on hyperblock information according to the present disclosure.

FIG. 30 is a diagram illustrating an HBS IE and a scheduling IE transmitted within a hyperblock according to the present disclosure.

FIG. 31 is a diagram illustrating an IE included in a control message related to a hyperblock structure according to the present disclosure.

FIG. 32 is a diagram illustrating an address indexing-based scheduling IE according to the present disclosure.

FIG. 33 illustrates an example of a scheduling list element format for bitmap-based block scheduling according to the present disclosure.

FIG. 34 illustrates another example of a scheduling list element format for bitmap-based block scheduling according to the present disclosure.

FIG. 35 illustrates an example of a scheduling list element format for bitmap-based round scheduling according to the present disclosure.

FIG. 36 illustrates another example of a scheduling list element format for bitmap-based round scheduling according to the present disclosure.

FIG. 37 is a diagram illustrating an example of a scheduling list element format based on address indexing according to the present disclosure.

FIG. 38 is a diagram illustrating an example of an operation of a controlee based on block scheduling information in a general block-based mode according to the present disclosure.

FIG. 39 is a diagram illustrating another example of an operation of a controlee based on block scheduling information in a general block-based mode according to the present disclosure.

FIG. 40 is a diagram illustrating the other example of an operation of a controlee based on round scheduling information in a general block-based mode according to the present disclosure.

FIG. 41 is a diagram illustrating another example of an operation of a controlee based on round scheduling information in a general block-based mode according to the present disclosure.

FIG. 42 is a diagram showing an example of an operation based on a scheduling information request IE according to the present disclosure.

[Mode for Invention]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The examples of the present disclosure may be applied to various wireless communication systems. For example, the examples of the present disclosure may be applied to an IEEE 802.15 standard-based wireless network (e.g., Zigbee, Bluetooth, etc.). In particular, the examples of the present disclosure may be applied to an IEEE 802.15.4 standard-based wireless network, and further, may be applied to a newly proposed IEEE 802.15.4ab standard-based UWB wireless network, or a next-generation UWB wireless network after IEEE 802.15.4ab. A wireless communication system to which the examples of the present disclosure are applied is not limited to a wireless network of the IEEE 802.15 series, and may be applied to a wireless local area network (WLAN) technology or a Wi-Fi technology of the IEEE 802.11 series, and may be applied to a cellular wireless communication system (e.g., a technology of the Long Term Evolution (LTE) series of the 3rd Generation Partnership Project (3GPP) standard and a 5G New Radio (NR)).

The IEEE 802.15.4ab standard including a technology for further advancing an UWB PHY/MAC is under discussion. For example, in the IEEE 802.15.4ab standard, additional coding, a preamble and a modulation technique for supporting improved link budget and/or reduced air-time; an additional channel and operating frequency; an interference reduction technology to support higher device density and higher traffic use cases; improvement of accuracy, precision, reliability and interoperability for high-integrity ranging; a technique for reducing complexity and power consumption; definition of a hybrid operation with narrowband signaling to support an UWB; refined native discovery and connection setup mechanism; a sensing capability for supporting presence detection and environment mapping; a mechanism supporting high data-rate streaming allowing a minimum throughput of 50Mbps as well as low-power and low-latency streaming; support for peer-to-peer, peer-to-multi-peer, station-to-infrastructure protocol and infrastructure synchronization mechanism, etc. are discussed.

Hereinafter, technical features to which examples of the present disclosure may be applied will be described.

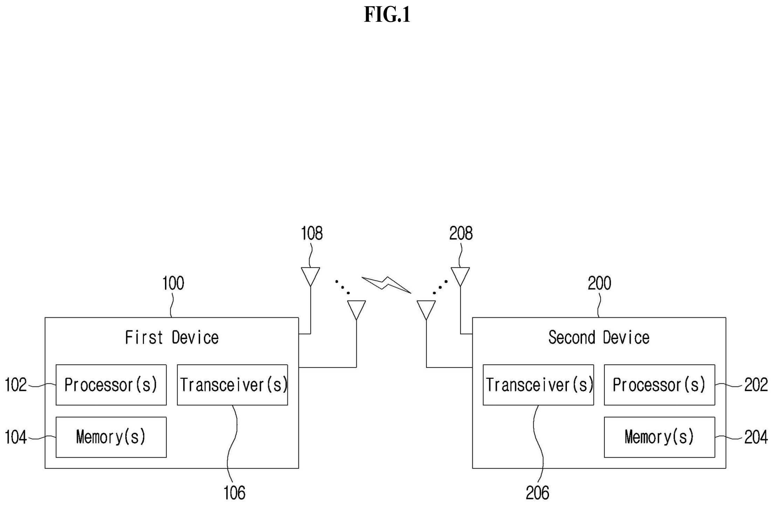

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

When devices 100 and 200) illustrated in FIG. 1 support ranging, it may be called a ranging-capable device (RDEV) or an enhanced ranging-capable device (ERDEV). For example, devices 100 and 200 illustrated in FIG. 1 may be called various terms such as a transmitting device, a receiving device, a transmitting RDEV, a receiving RDEV, a transmitting ERDEV, a receiving ERDEV, etc. For example, devices 110 and 200 may be called an initiator, a responder, an originator, a recipient, a controller, a controlee, etc. according to a role in a ranging operation. The role of one device is not fixed, but may be relatively determined according to a relationship with other devices. When one device interacts with multiple devices, one device may play multiple roles.

Referring to FIG. 1, the first device 100 and the second device 200 may transmit and receive a wireless signal through various UWB wireless network technologies (e.g., IEEE 802.15.4 series). The first device 100 and the second device 200 may include an interface for a medium access control (MAC) layer and a physical layer (PHY) that follow the regulations of the IEEE 802.15.4 standard. The IEEE 802.15.4-based PHY and MAC are included in an UWB subsystem, and an UWB subsystem may further include an UWB command interface (UCI) corresponding to an interface between an UWB controller and a host. An UWB subsystem may exchange a message with a host system through an UCI.

In addition, the first device 100 and the second device 200 may additionally support various communication standards (e.g., IEEE 802.15 series, IEEE 802.11 series, 3GPP LTE series, 5G NR series standards, etc.) technologies other than UWB wireless network technology. In addition, the device of the present disclosure may be implemented in various devices such as a mobile phone, a vehicle, a personal computer, augmented reality (AR) equipment, and virtual reality (VR) equipment, etc. In addition, the device of the present specification may support various communication services such as a voice call, a video call, data communication, autonomous-driving, machine-type communication (MTC), machine-to-machine (M2M), device-to-device (D2D), IoT (Internet-of-Things), etc.

The first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement an UWB wireless network technology (e.g., IEEE 802.15.4 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

The second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement an UWB wireless network technology (e.g., IEEE 802.15.4 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, the transceivers 106 and 206 of FIG. 1 may perform a transmission and reception operation of a signal (e.g., a packet or a physical layer protocol data unit (PPDU) conforming to IEEE 802.15.4, etc.). In addition, in the present disclosure, an operation in which various devices generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields included in the PPDU, 2) determining / configuring / acquiring time resources or frequency resources used for fields included in the PPDU; 3) determining / configuring / acquiring a specific sequence used for fields included in the PPDU action, 4) power control operation and/or power saving operation applied to a device, 5) operations related to ACK signal determination/acquisition/configuration/calculation/-decoding/encoding, etc. In addition, in the following example, various information (e.g., information related to fields / subfields / control fields / parameters / power, etc.) used by various devices to determine / acquire / configure / calculate / decode / encode transmission and reception signals may be stored in the memories 104 and 204 of FIG. 1.

In an UWB band, a device may perform medium access based on a Carrier Sense Multiple Access with Collision Avoidance (CSMA/CA) mechanism. A CSMA/CA mechanism may perform Clear Channel Assessment (CCA) that senses a wireless channel or medium for a predetermined time duration before a device starts transmission. Sensing may be performed, for example, by an energy detection (ED) method based on a predetermined threshold. As a result of sensing, if a medium is determined to be in an idle status, transmission is started through a corresponding medium. On the other hand, when a medium is detected to be occupied or busy, a device may attempt transmission after setting a delay period for medium access (e.g., a random backoff period) and waiting without starting transmission. By applying a random backoff period, multiple devices are expected to attempt transmission after waiting for a different time, so collision may be minimized.

In addition, when a superframe structure is applied, a slotted CSMA-CA mechanism may be applied to data transmission in the contention access period (CAP) of an active portion between the active portion and the inactive portion of an interval between beacons. A CSMA-CA mechanism may not be applied to data transmission in an active portion and in a contention free period (CFP). When a superframe structure is not applied, an unslotted CSMA-CA mechanism may be applied to the transmission of all data frames excluding an ACK frame for a data request command.

Ranging Measurement

Ranging includes distance measurement between two devices, and a device having a ranging capability may be referred to as a ranging-capable device (RDEV) or an enhanced ranging-capable device (ERDEV).

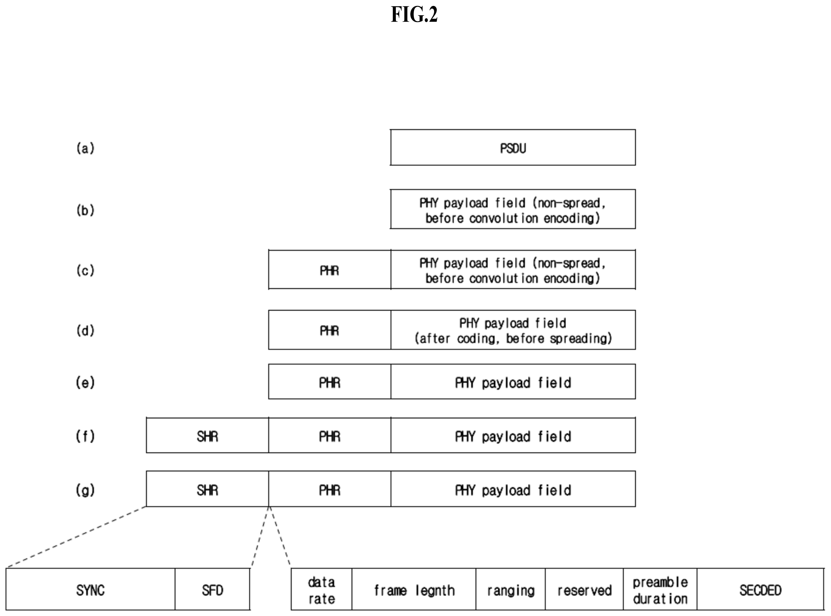

FIG. 2 is a diagram for describing a HRP UWB PPDU format to which the present disclosure may be applied.

FIGS. 2(a) to 2(g) show the encoding process of a HRP UWB PPDU. Through an encoding process, a HRP UWB PPDU having a format including a synchronization header (SHR), a PHY header (PHR) and a PHY payload field may be generated.

FIG. 2(a) shows a PHY service data unit (PSDU) received from a MAC through a PHY service access point (SAP). A PSDU may include a MAC PDU.

In FIG. 2(b), Reed-Solomon encoding may be applied to a PSDU, generating a PHY payload field. A PHY payload field in FIG. 2(b) is non-spread, and corresponds to a status before convolution encoding is applied.

In FIG. 2(c), a PHR field may be added in front of a PHY payload field. A PHR field may have a size of 19 bits of bit 0 to bit 18. For example, bit 0-1 may correspond to a data rate field, bit 2-8 may correspond to a frame length field, bit 9 may correspond to a ranging field, bit 10 may be reserved, bit 11-12 may correspond to a preamble duration field and bit 13-18 may correspond to a single error correct, double error detect (SECDED) field. A data rate field may indicate a data rate value applied to a PHY payload field. A frame length field may indicate the length of a PSDU. A ranging field may indicate whether a corresponding frame is a ranging frame (RFRAME). A preamble duration field may indicate the length (symbol unit) of the SYNC field of a SHR.

In FIG. 2(d), convolution encoding may be applied to generate a coded PHY payload field, and spreading may be applied to a PHY payload field in FIG. 2(e).

In FIG. 2(f), a SHR may be added in front of a PHR. A SHR field may include a SYNC field (or a preamble code) and a start-of-frame delimiter (SFD) field.

In FIG. 2(g), modulation is applied to SHR, PHR and PHY payload fields, and a PPDU encoding procedure is terminated. A basic coding rate may be applied to a SHR field. The burst position modulation-binary phase shift keying (BPM-BPSK) at a coding rate of 850kb/s or 110kb/s may be applied to a PHR field. BPM-BPSK at a coding rate indicated in a PHR may be applied to a PHY payload field. For example,

The PHR field may have a format including data rate (2 bits), frame length (7 bits), ranging (1 bit), reserved (1 bit), preamble duration (2 bits), and SECDED (6 bits) for base pulse repetition frequency (BRFP) mode, or may have a format including A1 (1 bit), A0 (1 bit), PHY payload length (10 bits), ranging (1 bit), and SECDED (6 bits) for higher pulse repetition frequency (HPRF) mode. The A1 and A0 fields may also indicate the size of an additional gap between the payload and the STS. For the PHR field, in BPRF mode, BPM-BPSK (burst position modulation-binary phase shift keying) with a coding rate of 850 kb/s or 6.8 Mb/s may be applied, in HPRF mode, modulation with a coding rate of 3.9 Mb/s, 7.8 Mb/s, 15.6 Mb/s, or 31.2 Mb/s may be applied, and in other cases, BPM-BPSK with a coding rate of 850 kb/s or 110 kb/s may be applied. For the PHY payload field, in HPRF mode, modulation with a coding rate of 6.8 Mb/s, 7.8 Mb/s, 27.2 Mb/s, or 31.2 Mb/s may be applied, and in other cases, BPM-BPSK with a coding rate indicated in the PHR may be applied.

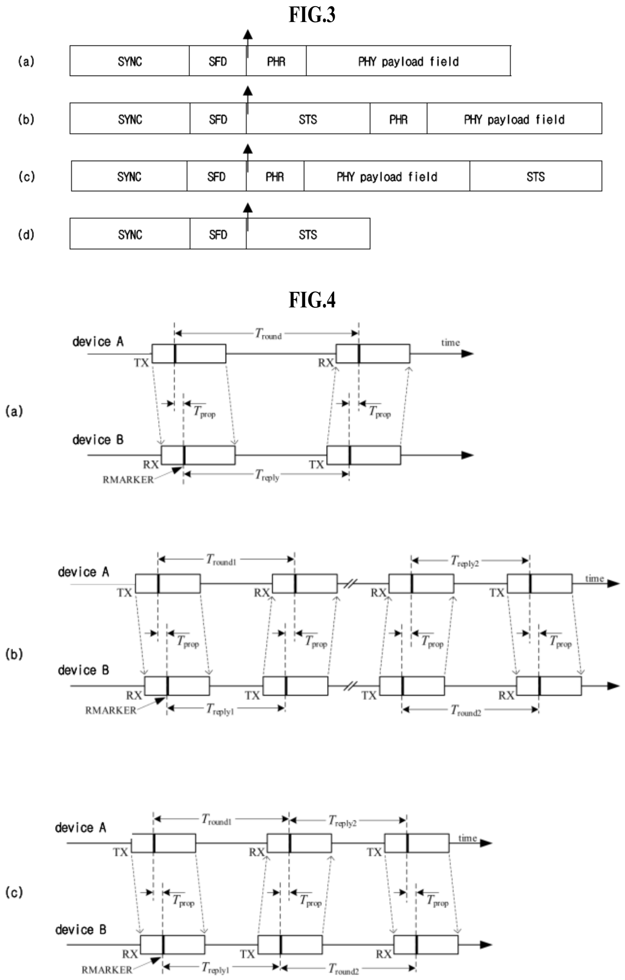

FIG. 3 is a diagram illustrating the RMARKER position according to an STS packet configuration in an HRP-ERDEV PPDU format to which the present disclosure can be applied.

A scrambled timestamp sequence (STS) field may include a sequence of pseudo-randomized pulses. For example, a STS may include a sequence of advanced encryption standard (AES)-128-based pseudo-randomized pulses, and may be utilized for accurate localization in the localization technology based on the spread spectrum technology in UWB communication.

A PPDU STS packet structure configuration may be different according to whether a STS field is included and its location.

FIG. 3(a) shows a format corresponding to STS packet configuration 0 (i.e., a STS field does not exist in a PPDU). This format may be defined in a mandatory way.

FIG. 3(b) shows a format corresponding to STS packet configuration 1 (i.e., a STS field is located immediately after a SFD field and before a PHR field). This format may be defined in a mandatory way.

FIG. 3(c) shows a format corresponding to STS packet configuration 2 (i.e., a STS field is located after a PHY payload field). This format may be defined in an optional way.

FIG. 3(d) shows a format corresponding to STS packet configuration 3 (i.e., a STS field is located immediately after a SFD field, a PHR field does not exist, and a data field (i.e., a PHY payload field) does not exist). This format may be defined in a mandatory way.

A PPDU format like examples in FIG. 3 may be referred to as a HRP-ERDEV PPDU format. In FIG. 3, an arrow indicates a ranging marker (RMARKER) reference position in each format. RMARKER may be a reference for timestamp measurement or ranging counter.

For example, RMARKER may be defined as a time at which the start of the first symbol following the SFD of RFRAME is at a local antenna. The next higher layer may estimate a relative clock offset between local reference clocks on a remote transmitting end and a receiving end based on the reporting of a SRMARKER receiving ranging counter value for at least one STS segment.

A ranging counter supported by RDEV corresponds to a set of behavioral properties and capabilities of a RDEV calculating a ranging counter value. A ranging counter value is an unsigned integer, and may be defined as a length of at least 32 bits. The unit of a ranging counter is defined as $2^{-7}$ of a 499.2MHz chipping period for a HRP UWB PHY, and is approximately 15.65 picoseconds(ps), and is defined as $20^{-20}$ of a 1MHz basic chipping rate for a LRP UWB PHY, and is approximately 0.9537ps.

A ranging capability may be enabled in a RDEV by using a MAC common part sublayer (MCPS)-DATA.request primitive and a MAC sublayer management entity (MLME)-RX-ENABLE.request primitive. A primitive may mean a set of instructions or parameters exchanged between sublayer entities or layers within one device. For example, an originator may request a ranging capability through a MCPS-DATA.request primitive, and a ranging capability may be enabled in a recipient through a MLME-RX-ENABLE.request primitive.

Ranging and Localization Method

The ranging and localization methods supported by RDEVs and ERDEVs may be based on a time-stamping capability. As a time-based technique, single-sided two-way ranging (SS-TWR), double-sided two-way ranging (DS-TWR), and one-way ranging/time difference of arrival (OWR/TDOA) are described below.

FIG. 4 is a diagram for describing two-way ranging techniques to which the present disclosure may be applied.

In the example of FIG. 4(a), SS-TWR includes the measurement of the round-trip delay of a single message from one device to another device and a response sent to a sending device. Device A initiates message exchange, device B sends a response, and T_prop corresponds to the propagation time of RMARKER between devices.

Each device precisely measures the transmission and reception time of a message frame, and accordingly, may calculate T_round and T_reply by simple subtraction. The resulting TOF may be estimated as ^T_prop by the following equation.

【Equation 1】

$$\hat{T}_{\text{prop}} = \frac{1}{2}(T_{\text{round}} - T_{\text{reply}})$$

When a device may estimate a relative clock offset between itself and a remote device, the accuracy of TOF may be improved by the following equation.

【Equation 2】

$$\hat{T}_{\text{prop}} = \frac{1}{2}(T_{\text{round}} - T_{\text{reply}} - (1 - C_{\text{offs}}))$$

Here, C_offs corresponds to a value obtained after the receiver of device A measures a relative clock offset between itself and the transmitter of remote device B.

In the example of FIG. 4(b), DS-TWR corresponds to the extension of SS-TWR, and two round-trip times may be used and combined to calculate a TOF result by reducing an error for a case where an uncorrected clock frequency offset exists although a response delay is long. Device A initiates the first round-trip time measurement, and device B responds to it, and then device B initiates the second round-trip time measurement, and device A responds to it, so the entire DS-TWR exchange may be completed. T_prop corresponds to the propagation time of RMARKER between devices.

Each device precisely measures the transmission and reception time of a message frame, and accordingly, may calculate T_round and T_reply by simple subtraction. The resulting TOF may be estimated as ^T_prop by the following equation.

【Equation 3】

$$\hat{T}_{\text{prop}} = \frac{(T_{\text{round1}} \times T_{\text{round2}} - T_{\text{reply1}} \times T_{\text{reply2}})}{(T_{\text{round1}} + T_{\text{round2}} + T_{\text{reply1}} + T_{\text{reply2}})}$$

The example of FIG. 4(c) corresponds to the reduction of DS-TWR through four messages in FIG. 4(b) to three messages. In other words, the response of the first round-trip time measurement may be used as the initiation message of the second round-trip time measurement.

Next, a TDOA method is described. TDOA corresponds to a technique for locating a wireless device (e.g., a radio frequency identification (RFID) device) based on the relative arrival time of a single message or multiple messages. OWR may be used for TDOA. There are two cases of TDOA. In one case, a message is periodically broadcast by a mobile device, and a time at which a broadcast message arrives at multiple fixed nodes synchronized in a predetermined manner may be compared. Generally, a message transmitted by a mobile device may be referred to as a blink. In another case, multiple synchronized nodes may sequentially broadcast a message according to a transmission time offset known to each other. For any pair of fixed synchronized nodes, a difference in the arrival time of blinks in the first case, or a difference in the arrival time of broadcast messages received by a mobile device in the second case locates a mobile device on a hyperbolic surface. By combining results from such multiple pairs, an intersection point between sets of hyperbolic surfaces may be derived, and accordingly, the location of a mobile device may be specified. In the second case, a transmission offset may be considered when calculating a difference in the arrival time of messages from synchronized nodes.

RFID devices may typically use the shortest blink message as much as possible (e.g., a multipurpose frame) to reduce power consumption. A multipurpose frame may be 12 octets long, and may include a short frame control field and a sequence number field, and may not include a destination address field, an extended source address field and a frame check sequence (FCS).

The synchronization of fixed nodes may be performed by the wired distribution of clock signals, and a wireless synchronization technique may be applied. The UWB messages (and known/pre-measured TOF) transmitted between fixed nodes may be used to calculate a relative clock frequency offset and a drift between fixed nodes. This information may be used to correct the arrival time of blink messages based on a common time, making TDOA data meaningful.

Set-up Procedure before Ranging Exchange

In order to reduce power consumption, disabling ranging may be defined as a default status. Enabling ranging in all RDEVs participating in TWR exchange may be performed by a higher layer. In addition, when an optional capability is used, it may be assumed that predetermined coordination for preamble and channel selection is performed before TWR exchange.

Finish-up Procedure after Ranging Exchange

At the end of TWR exchange, each device may have transmit (TX) and receive (RX) ranging counter values related to round-trip time measurement or reply time. In order to calculate TOF, all of these values are required in a node where calculation is performed. For this purpose, out-of-band (OOB) signaling, a custom message, a ranging measurement information (RMI) information element (IE), etc. may be used.

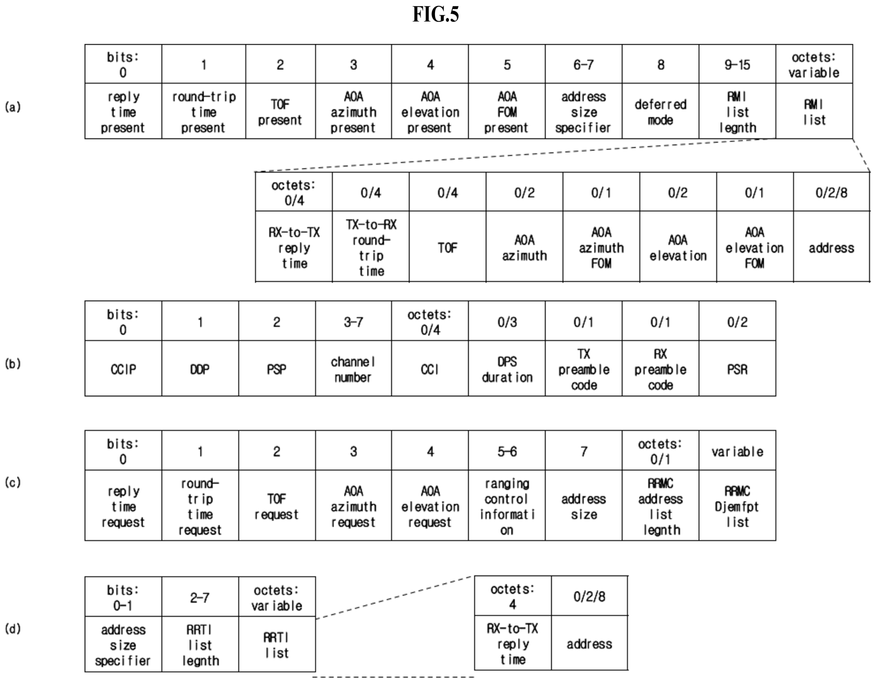

FIG. 5 is a diagram for describing examples of a format of a RMI IE, a RCPCS IE, a RRMC IE and a RRTI IE to which the present disclosure may be applied.

FIG. 5(a) shows an example of a RMI IE format.

A RMI IE may be used to send at least one ranging-related measurement to at least one device. A RMI IE content field may have the same format as the example of FIG. 5(a).

1, a value of a reply time present field, may indicate that a RX-to-TX (or TX-to-RX) reply time field is present in each RMI list element, and a value of 0 may indicate that it is not present. A RX-to-TX (or TX-to-RX) reply time may correspond to T _reply described by referring to FIG. 4.

1, a value of a round-trip time present field, may indicate that a TX-to-RX round-trip time field is present in each RMI list element, and a value of 0 may indicate that it is not present. A TX-to-RX round-trip time may correspond to T_round described by referring to FIG. 4.

1, a value of a TOF present field, may indicate that a TOF field is present in each RMI list element, and a value of 0 may indicate that it is not present.

1, a value of an AOA azimuth present field, may indicate that an AOA azimuth field is present in each RMI list element, and a value of 0 may indicate that it is not present.

1, a value of an AOA elevation present field, may indicate that an AOA elevation field is present in each RMI list element, and a value of 0 may indicate that it is not present.

1, a value of an AOA figure of merit (FOM) present field, may indicate that an AOA azimuth FOM field is present in each RMI list element when an AOA azimuth field is present, and may indicate that an AOA elevation FOM field is present in each RMI list element when an AOA elevation field is present, and a value of 0 may indicate that an AOA azimuth FOM field or an AOA elevation FOM field is not present.

An address size specifier field may specify the size of addresses used in a RMI list field (e.g., 2 or 8).

0, a value of a deferred mode field, may indicate that a corresponding RMI IE is embedded into RFRAME, and a value of 1 may indicate that a corresponding RMI IE is included in a deferred message transmitted in the next measurement report phase.

A RMI list length field may specify the number of elements of a RMI list field. Fields included in a RMI list field are as shown in FIG. 5(a).

FIG. 5(b) shows an example of a RCPCS IE format.

A ranging channel and preamble code selection (RCPCS) IE may be used to indicate channel selection for dynamic preamble code and channel selection (DPS) and/or selection of a TX/RX preamble code. DPS may include changing a long preamble to protect against an attacking device intercepting ranging. A RCPCS IE content field may have the same format as the example of FIG. 5(b).

1, a value of a CCI present (CCIP) field, may indicate that a CCI field is present, and a value of 0 may indicate that it is not present.

1, a value of a DPS Duration Present (DDP) field, may indicate that a DPS duration field is present, and a value of 0 may indicate that it is not present.

1, a value of a preamble sequence selection present (PSP) field, may indicate that preamble sequence selection fields, i.e., a TX preamble code field, a RX preamble code field and a preamble symbol repetitions (PSR) field, are present, and a value of 0 may indicate that they are not present.

A channel number field may indicate an UWB channel number for forthcoming ranging exchange.

A channel configuration interval (CCI) field may specify a channel configuration interval. A channel configuration interval may correspond to a time in the unit of a ranging scheduling time unit (RSTU) between the transmission of a corresponding IE and reconfiguration for a specified channel.

A RSTU corresponds to 416 chips (approximately 833.33ns) (416 chips = 416 / 499.2*106) for a HRP UWB PHY. A RSTU corresponds to 1 microsecond (us) (= 1 chip at a 1MHz basic chipping rate) for a LRP UWB PHY.

A DPS duration field may specify the effective time duration of DPS. A corresponding duration may be specified in the unit of a RSTU for an ERDEV and in the unit of a symbol for a non-ERDEV.

A TX preamble code field may indicate a DPS preamble code that will be used for transmission during the forthcoming ranging exchange on a side transmitting a corresponding IE.

A RX preamble code field may indicate a DPS preamble code that will be used for reception during the forthcoming ranging exchange on a side transmitting a corresponding IE.

A PSR field may indicate the number of preamble symbol repetitions that will be used for the SYNC of each RFRAME of the forthcoming ranging exchange.

A MLMR-DPS.request and MLME-DPS.confirm primitive may be applied to the optional DPS mode of ranging. The ConfigTime parameter of a MLME-DPS.request primitive may be used to specify a future time to which a preamble code and/or a channel number will be applied. A time to which a DPS change will be applied may be exchanged through the CCI field of a RCPCS IE.

Basic Ranging Exchange

A recipient may turn on or enable ranging in a MAC on a recipient side based on a MLME-RX-ENABLE.request primitive from the next higher layer.

After ranging is turned on in a MAC on a recipient side (i.e., receiving a MLME-RX-ENABLE.request primitive), all received RFRAMEs may generate a TX/RX ranging counter.

An originator may transmit data to a recipient based on a MCPS-DATA.request primitive.

A recipient may generate a ranging report for all RFRAMEs and transmit an ACK frame to an originator.

An originator may enable Tx-to-Rx turnaround (i.e., repeat data transmission and ACK reception) by receiving an ACK frame from a recipient. In this regard, the next higher layer may not be involved.

A ranging report may include the issue of a MCPS-DATA. confirm primitive on an originator side (i.e., reporting the result of invoking a MCPS-DATA.request primitive) and the issue of a MCPS-DATA.indication primitive on a recipient side (i.e., indicating the reception of data from an originator, or indicating that ranging information according to the reception of a packet from an originator is available).

Until ranging is disabled, the generation of the ranging report of a recipient, the transmission of ACK to an originator, the enabling of Tx-to-Rx turnaround based on the reception of the ACK frame of an originator and a ranging report may be repeated.

Ranging Procedure

First, the control of ranging and the transmission (transfer) of results are described.

A measurement value may be exchanged between RDEVs to complete ToF calculation. For this purpose, TWR may be controlled through information elements and ranging data may be exchanged between RDEVs.

Specifically, information elements may be used for the control of TWR and the transmission of ranging data between RDEVs participating in ranging exchange. For various ranging methods, according to a required use case, a measurement result by both devices may be combined to complete TOF calculation between RDEVs participating in ranging exchange. In other words, one device may transmit its ranging measurement result to another device. Information elements may be specified to provide a mechanism for controlling TWR and support the transmission of ranging information between devices participating in ranging exchange. In order to ensure the integrity of corresponding information transmission, a secure private data communication capability may be used.

Hereinafter, a ranging procedure for SS-TWR that applies a deferred reply time result is described.

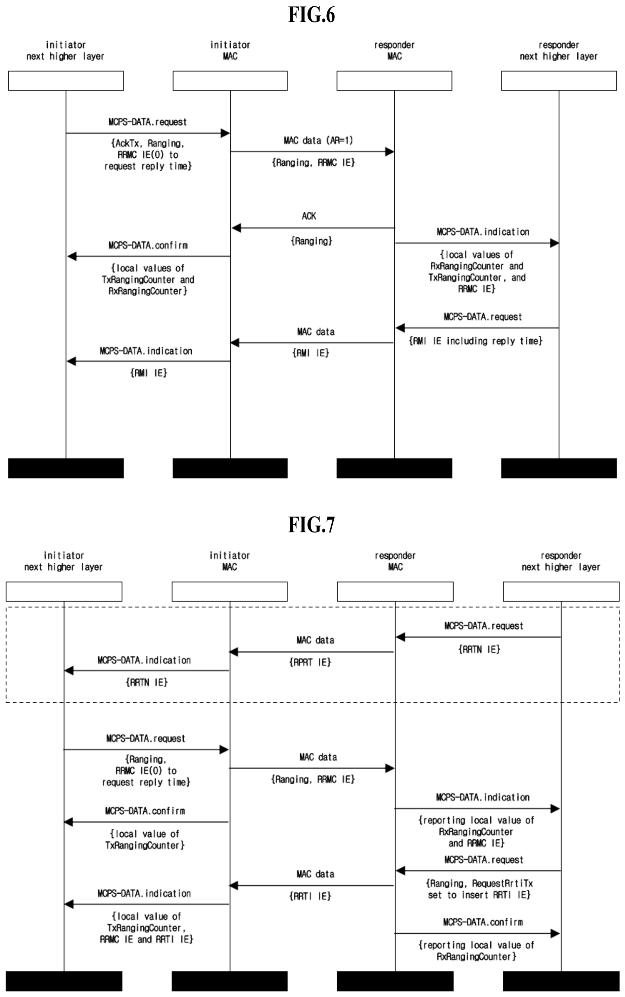

FIG. 6 shows an example of a message sequence chart for SS-TWR applying a deferred reply time result to which the present disclosure may be applied.

In a message sequence chart for ranging exchange, RRMC IE(0) may represent a RRMC IE including a ranging control information field with a value of 0 (i.e., a ranging initiation message for SS-TWR). The Acknowledgment Request (AR) field of a MAC header may represent whether ACK is requested.

The next higher layer of an initiator may have sufficient information for calculating TOF between devices by using the above-described equation at a time when receiving a RMI IE (e.g., FIG. 5(a)).

The ranging exchange initiation of an initiator may invoke a MCPS-DATA.request primitive to request ranging reply time information and transmit a ranging frame including a Ranging Request Measurement and Control (RRMC) information element including a ranging control information field.

FIG. 5(c) shows an example of a RRMC IE format.

A RRMC IE may transmit a ranging request and include information controlling a ranging procedure.

The reply time request, round-trip time request, TOF request, AOA azimuth request and AOA elevation request fields of a RRMC IE format may indicate that corresponding information is requested when that value is 1 and may indicate that corresponding information is not requested when that value is 0.

A ranging control information field may indicate that a corresponding frame is a ranging initiation message for SS-TWR when that value is 0, that a corresponding frame is a response to a ranging initiation message for SS-TWR when that value is 1, that a corresponding frame is a ranging initiation message for DS-TWR when that value is 2 and that a corresponding frame is continuing DS-TWR and initiates the second round-trip time measurement when that value is 3.

A address size field may specify the size of addresses used in a RRMC address list field. When the value of an address size field is 0, all addresses of a RRMC address list element may correspond to a short address. When the value of an address size field is 1, all addresses of a RRMC address list element may correspond to an extended address.

A RRMC address list length field may indicate the number of addresses of a RRMC address list field. When an address is not provided (e.g., for unicast ranging where a target device may be identified by a destination address in a MAC header (MHR)), a RRMC address list length field may be omitted.

When a RRMC IE is a broadcast message, and when a transmitter wants to receive a response to a ranging request from all devices, RRMC address list length and RRMC address list fields may be omitted. Alternatively, when a transmitter wants to receive a response to a ranging request from specific devices (or a device set), RRMC address list length and RRMC address list fields may be used to select a device set for a response.

For SS-TWR, since an initiator generally calculates TOF, a responder may request a TOF result by setting the TOF request field of a RRMC IE included in a response message.

For DS-TWR, since a responder generally calculates TOF, an initiator may request a TOF result by including a RRMC IE in two messages transmitted to perform DS-TWR exchange.

When an initiator requests different information from multiple responders, multiple RRMC IEs may be included in one broadcast message.

A RRMC address list field may include a list of addresses for which a RRMC IE heads.

In relation to a ranging report (or a response ranging frame), an initiator side may complete round-trip time measurement, and a MCPS-DATA.confirm primitive may provide an initiator side with a ranging report defining a round-trip time. On a recipient side, a MCPS-DATA.indication primitive may provide a ranging report on a response side defining a reply time for round-trip time measurement.

FIG. 5(d) shows an example of a Ranging Reply Time Instantaneous (RRTI) IE format.

In association with at least one frame including a RRMC IE where a reply time request field is set as 1, a RRTI IE may be included in a corresponding response frame to transmit the reply time of a response frame.

An address size specifier field may be defined as in the following table.

[Table 1]

| A value of an address size specifier field | Address Size |
| --- | --- |
| 00 | 0 Octet, no address |
| 01 | Reserved |
| 10 | 2 Octets, short address (16 bits) |
| 11 | 8 Octets, extended address (64 bits) |

A RRTI list length field may indicate the number of elements in a RRTI list field. A RRTI list field may include RRTI list elements.

The RX-to-TX reply time field of a RRTI list field may be set as a value indicating a difference between the transmission time of a response RFRAME including a RRTI IE and a reference time specified by a higher layer (i.e., T_reply in the example of FIG. 4(a)). A reference time may correspond to the reception time (based on RMARKER) of RFRAME including a RRMC IE where a reply time request field is set as 1.

The address field of a RRTI list field may be set as the address of a device transmitting a RRMC IE requesting a reply time. An address field may be omitted in unicast ranging. In scheduled multi-node ranging, when the reply time of other RDEVs are negotiated in advance and the order is determined, an address field may be omitted.

Hereinafter, a ranging procedure for SS-TWR that applies an embedded reply time result is described.

FIG. 7 shows an example of a message sequence chart for SS-TWR applying an embedded reply time result to which the present disclosure may be applied.

For SS-TWR applying a reply time result, ranging exchange may be initiated by a ranging frame requesting ranging reply time information and including a RRMC IE where a ranging control information field is set as 0. A responding device may complete round-trip measurement by transmitting a response frame including an embedded ranging reply time instantaneous (RRTI) IE. When a device has a capability to generate a RRTI IE, the number of messages required for ranging measurement may be minimized, so power may be saved. However, it may take time to calculate the arrival time of a received ranging message and prepare a RRTI IE value. In some cases, this time may be known a priori in an OOB manner, and a ranging reply time negotiation (RRTN) IE may provide a device with a mechanism that indicates a preferred reply time, i.e., a time required to prepare a frame including a RRTI IE. When this time is known, a ranging initiating device may expect a response message after a specific time, and may save energy by delaying turning on a receiver until then. This may be applied to both SS-TWR and DS-TWR ranging exchanges.

In FIG. 7, RRMC IE(0) represents a RRMC IE including a ranging control information field with a value of 0. The communication of a RRTN IE in a box indicated with dotted lines may be performed at any convenient time before ranging exchange is initiated, or preferred reply time information may be pre-known or exchanged through OOB. When receiving a MCPS-DATA.indication primitive including the RRTI IE of a responder, the next higher layer of an initiator may have sufficient information to calculate TOF between two devices according to the above-described equation.

Hereinafter, a ranging procedure for SS-TWR to which a fixed reply time is applied is described.

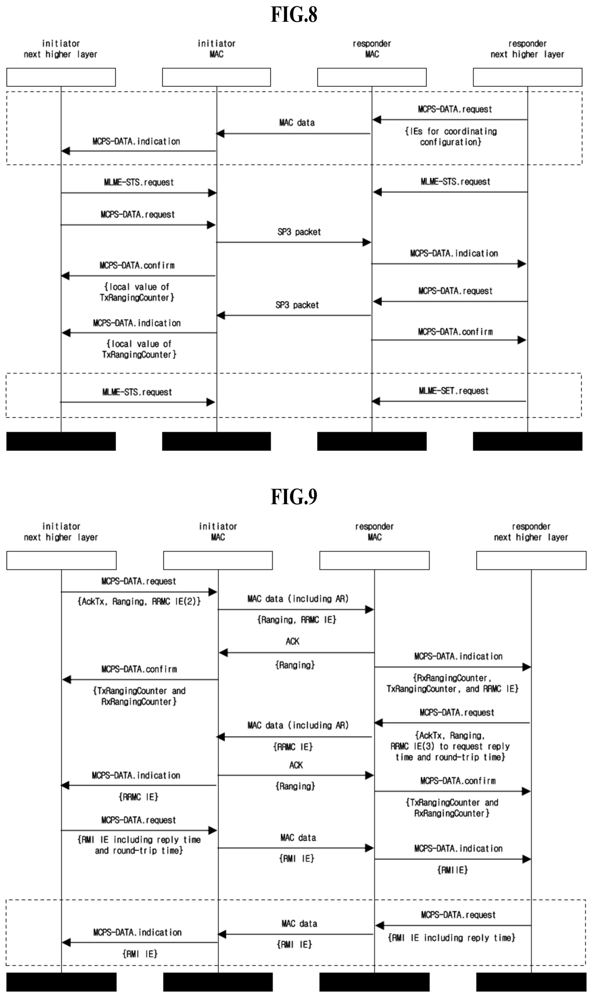

FIG. 8 shows an example of a message sequence chart for SS-TWR using a SP3 (scrambled timestamp sequence packet configuration option three) packet to which the present disclosure may be applied.

When a responding device is capable of precise control over the transmission time of its response message to the arrival time of a ranging initiation message, a reply time (i.e., Treply) may have a fixed known value agreed between devices participating in ranging exchange. In this case, it may not be required to embed Treply in a response message or to transmit it separately in an additional message. The accuracy of resulting ranging may depend on how much precise control a responding device has over the transmission time of its response message. For example, each 1 ns error in TOF may correspond to a ranging error of about 30cm.

HRP-ERDEV PPDU format SP3 may be used for a fixed reply time.

In the example of FIG. 8, an initiation message in a box indicated with dotted lines may represent communication for agreement and coordination for all other parameters required to allow communication to proceed and the use of a SP3 packet between devices. In the example of FIG. 8, only a single message is indicated, but there may be a series of messages in each direction for an agreement on all parameters. For example, a RRNT IE may be used to agree on a fixed reply time.

In each device, the next higher layer may configure a SP3 packet format in all devices, and may appropriately configure an operation by using a MLME-STS.request primitive in order to set a personal area network information base (PIB) attribute (e.g., phyHrpUwbStsKey, phyHrpUwbStsVCounter, phyHrpUwbStsVUpper96, etc.). When a higher layer selects a SP3 packet configuration, subsequent MCPS-DATA primitives are related to a SP3 packet until a higher layer uses a MLME-STS.request primitive to change a packet configuration.

A MCPS-DATA.request primitive may be used to initiate ranging exchange, and in a corresponding mode, a PPDU may not convey MAC data. Although not shown, it may be assumed that the invocation of a MLME-RXENABLE.request primitive turns on a receiver at an appropriate time to receive a PPDU. Since a PHY is configured for a SP3 packet, a PHY may notify a MAC layer of the reception of a PPDU at the end of a scrambled timestamp sequence (STS), and a MAC similarly aware of a SP3 configuration may deliver the RxRangingCounter value of a RangingReportDescriptor parameter of a MCPS-DATA.indication primitive. In addition, when it is assumed that the RangingStsFom of RangingReportDescriptor is acceptable, a higher layer may initiate a response by invoking a MCPS-DATA.request primitive specifying RangingTxTime according to an agreed fixed reply time.

When a SP3 packet response is received in an initiating device, and it is assumed again that the RangingStsFom of the RangingReportDescriptor parameter of a MCPS-DATA.indication primitive is acceptable, an initiator side may have sufficient information to calculate TOF between devices according to the above-described equation based on a known fixed reply time.

Ranging exchange may be repeated multiple times until higher layers are mutually agreed. In order to resume PHY and MAC data interactions, the next higher layer may use a MLME-STS.request primitive to restore a STS packet configuration to a value that allows such data interactions. It is shown in a box indicated with final dotted lines in FIG. 8.

A LRP-ERDEV may also support challenge-response ranging to which a fixed reply time is applied in order to remove the need for a data message to convey a reply time.

Hereinafter, a DS-TWR ranging procedure to which deferred reply time information is applied is described.

FIG. 9 shows an example of a message sequence chart for DS-TWR to which deferred reply time information to which the present disclosure may be applied is applied.

DS-TWR may essentially include the completion of SS-TWR exchange initiated in each device, and a combination of its results. DS-TWR may be initiated by the next higher layer transmitting a ranging data frame conveying a RRMC IE (i.e., RRMC IE(2)) where the value of a ranging control information field is set as 2. This frame and its ACK may define the first round-trip time measurement. The delivery of a RRMC IE in a MCPS-DATA.indication primitive may be notified to the next higher layer to initiate the second round-trip time measurement by the transmission of a data frame in another direction. This data frame may include a RRMC IE (i.e., RRMC IE(3)) where the value of a ranging control information field is set as 3 to indicate the continuation of exchange, and both reply time request and round-trip time request fields may be set as 1 to request a reply time and the result of the first round-trip time measurement. ACK for this message may complete the second round-trip time measurement. A subsequent message from an initiator may convey the first round-trip time measurement result and the reply time of the second round-trip time measurement through a RMI IE. When receiving a MCPS-DATA.indication primitive (including a RMI IE), a responder may have sufficient information to calculate TOF between devices according to the above-described equation. The subsequent reporting of a ranging result to an initiator side by using a RMI IE may be performed according to the value of the TOF request field of an initiating RRMC IE.

Hereinafter, a DS-TWR ranging procedure that applies embedded ranging time information is described.

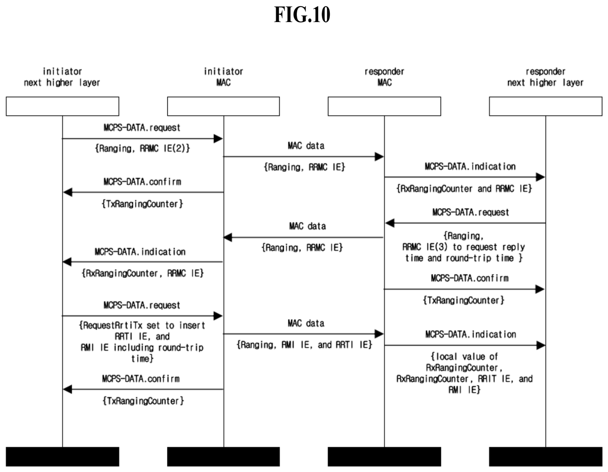

FIG. 10 shows an example of a message sequence chart for DS-TWR to which embedded ranging time information to which the present disclosure may be applied is applied.

For 3-message DS-TWR exchange in FIG. 4(c) described above, it is required that an initiator side may embed a reply time as a part of the completion of the second round-trip time measurement. In the example of FIG. 10, DS-TWR may be initiated by RFRAME conveying a RRMC IE (i.e., RRMC IE(2)) where a TOF request field is set as 0 (i.e., an initiator side does not request ranging report) and a ranging control information field is set as 2.

A responder side may complete the first round-trip time measurement, and initiate the second measurement by using RFRAME conveying a RRMC IE (i.e., RRMC IE(3)) where a ranging control information field is set as 3 to indicate the continuation of exchange. In this RRMC IE, both reply time request and round-trip time request fields are set as 1, so the result of the first round-trip time measurement and a reply time for the second round-trip time measurement may be requested. An initiator may complete exchange by transmitting a final RFRAME that includes the result of the first round-trip time measurement in a RMI IE and the reply time of the second round-trip time measurement in a RRTI IE.

When receiving the MCPS-DATA.indication primitive that is a higher layer, a responder may have sufficient information to calculate TOF between devices according to the above-described equation. When the initiator of ranging exchange wants a corresponding result, an initiator may set the TOF request field of an initiating RRMC IE as a value requesting a responder side to send a result in the RMI IE of a subsequent message at the end of the exchange.

Hereinafter, a different procedure for the coordination of a RDEV and an ERDEV will be described.

For the successful interoperation of a HRP-ERDEV when a STS is used, a transmitter and a receiver need to be arranged for a seed (i.e., a STS key and data value V) used in the generation of a STS in a transmitter and used in the generation of a sequence for correlating with a STS received in a receiver. For the coordination of these values, a secure private data communication capability may be used, and a seed may be transmitted between devices by using a Ranging STS Key and Data (RKSD) IE. A counter value in a RSKD IE may relate to a current packet or a future packet as indicated by the current packet (CP) field of a corresponding IE. A higher layer may use received RSKD IE information and configure a STS seed appropriately for future packet transmission and reception (e.g., through a PIB attribute such as phyHrpUwbStsKey, phyHrpUwbStsVUpper96, phyHrpUwbStsVCounter, etc.). The header IE version of a RSKD IE may be used to synchronize a STS generator by using information transmitted with a secured payload IE and data.

When a frame including a RSKD IE header IE is received, a corresponding IE may be delivered to the next higher layer to set an attribute such as phyHrpUwbStsKey, phyHrpUwbStsVUpper96, phyHrpUwbStsVCounter, etc. appropriately for STS generation. When a frame including a RSKD IE header IE does not pass the incoming security processing, for example, when a receiver does not have a key to validate a message integrity code (MIC), a RSKD IE may be delivered to the next higher layer through the HeaderIeList parameter of a MLME-COMM-STATUS.indication primitive.

Multi-node Ranging

Multi-node ranging may include ranging between at least two devices. Each device may perform a role in multi-node ranging.

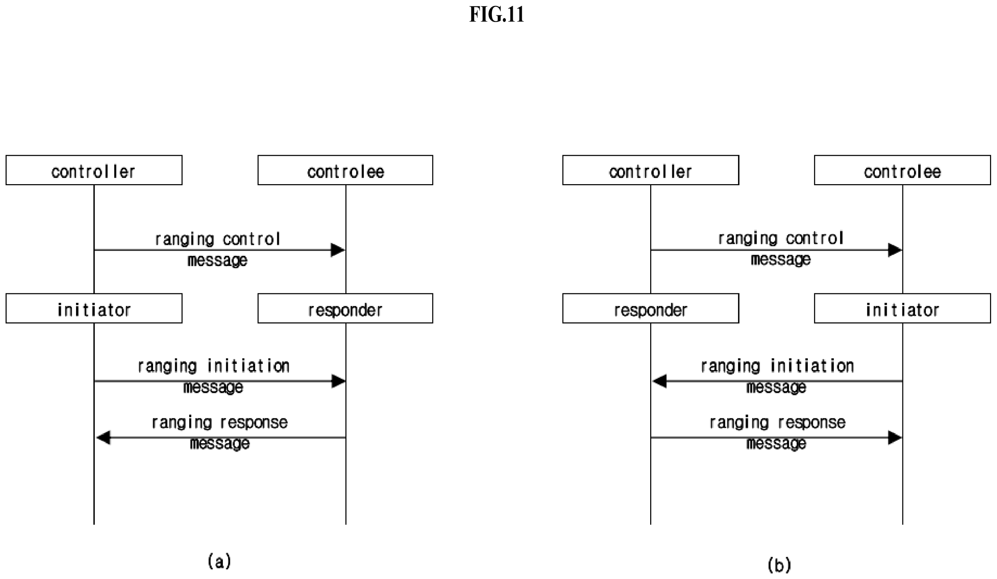

FIG. 11 is a diagram for describing the role of a device in a ranging procedure to which the present disclosure may be applied.

A controller may correspond to a ERDEV that transmits a ranging control message (RCM) and defines a ranging parameter. A RCM may correspond to a data frame including an advanced control (ARC) IE. A controlee may correspond to an ERDEV that uses a ranging parameter provided by a controller through a RCM. An initiator corresponds to an ERDEV that sends the first message of ranging after a RCM and initiates ranging exchange, and a controller or a controlee may be an initiator. A responder corresponds to an ERDEV that responds to a ranging initiation message received from an initiator, and a controller or a controlee may be a responder.

The next higher layer of a controller may determine a ranging parameter and the role of an ERDEV participating in ranging exchange (i.e., an initiator or a responder).

For example, FIG. 11(a) shows an example in which a controller transmitting a ranging control message (RCM) is an initiator transmitting a ranging initiation message in ranging exchange and a controlee receiving a RCM is a responder receiving a ranging initiation message and transmitting a ranging response message in ranging exchange. FIG. 11(b) shows an example in which a controller transmitting a RCM is a responder receiving a ranging initiation message and transmitting a ranging response message in ranging exchange and a controlee receiving a RCM is an initiator transmitting a ranging initiation message in ranging exchange.

A ranging session may be defined as a group of ERDEVs involved in a consecutive ranging procedure configured by the initial set of a ranging parameter. A ranging session may include only one controller and at least one initiator. A controller may configure an initial ranging parameter and update a parameter during a ranging session.

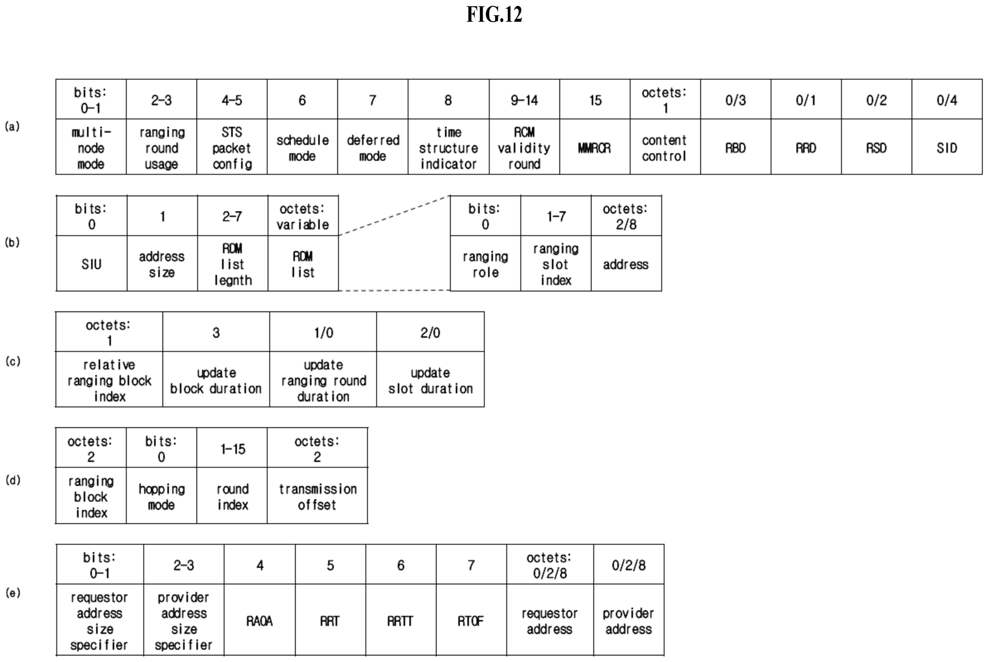

FIG. 12 shows examples of ARC IE, RDM IE, RBU IE, RR IE and SRRE IE formats to which the present disclosure may be applied.

FIG. 12(a) shows an example of a ARC IE format.

A controller may use an ARC IE to transmit ranging configuration information to a controlee. An ARC IE may be transmitted to one controller through a unicast frame and to a plurality of controllers through a broadcast frame.

A controlee may use an ARC IE to transmit its preferred ranging parameter to a controller together with a Ranging Change Request (RCR) IE.

Each field of an ARC IE may be defined as follows.

[Table 2]

| Value of multi-node mode field | Meaning |
|---|---|
| 0 | Single device-to-single device (unicast) |
| 1 | Multi-node one-to-many |
| 2 | Multi-node many-to-many |
| 3 | Reserved |

[Table 3]

| Value of ranging round usage field | Meaning |
|---|---|
| 0 | OWR(one-way ranging) |
| 1 | SS-TWR(single-sided two-way ranging) |
| 2 | DS-TWR(double-sided two-way ranging) |
| 3 | Ranging ancillary information exchange |

[Table 4]

| Value of STS packet configuration field | Resulting STS packet configuration |
|---|---|
| 0 | A STS field is not included in a PPDU (FIG. 3(a)). |
| 1 | STS Packet Structure #1 (FIG. 3(b)) |
| 2 | STS Packet Structure #2 (FIG. 3(c)) |
| 3 | STS Packet Structure #3 (FIG. 3(d)) |

[Table 5]

| Value of a schedule mode field | Selected ranging schedule mode and operation |
|---|---|
| 0 | Contention-based ranging is used for subsequent ranging rounds, and a RDM IE and a RCPS IE are used for control participation. |
| 1 | Scheduled-based ranging is used for subsequent ranging rounds, and participation in ranging and time slot allocation is fixed or controlled through the use of a RDM IE. |

A contention-based ranging type corresponds to a method in which a controller is unaware of the presence or number of controlees and accordingly, ERDEVs perform ranging in a contention-based manner. A collision may occur, so it may be required to filter an incorrect or wrong ranging result from a higher layer. An initiator or a responder may compete to perform transmission within an appropriate time slot. When an initiator and a responder compete, a ranging contention phase structure (RCPS) IE may be added to an ARC IE to designate a different phase (e.g., distinguished through a slot index) in a RCM. When a RCM is received, a controlee may know that it was selected to participate in a ranging round. A time-scheduled ranging type corresponds to a method in which a controller knows all controlees and designates the exact schedule of ranging transmission. A controller may select devices participating in ranging, give a ranging role (i.e., an initiator or a responder) and allocate a time slot through a ranging device management (RDM) IE. If the role and transmission schedule of a device are pre-designated by an OOB signaling method, etc., a RDM IE may be omitted.

[Table 6]

| Value of deferred mode field | Whether a deferred mode is allowed in measurement report |
|---|---|
| 0 | The round-trip measurement is completed immediately by embedding a RRTI IE in a response frame. |
| 1 | The round-trip time or reply time is reported in a measurement report phase. |

[Table 7]

| Value of time structure indicator field | Selected ranging time structure operation |
|---|---|
| 0 | A time structure is interval-based, and a RIU IE is used to control ranging interval update. |
| 1 | A time structure is block-based, and a RR IE is used to control ranging interval update. |

A RCM validity rounds field indicates the number of consecutive ranging rounds controlled by a RCM, which may be used to define a ranging round set. A multiple message receipt confirmation request (MMRCR) field may indicate whether multiple message receipt confirmation is requested.

A content control field may represent whether other fields are present in an ARC IE. Bits 0, 1, 2 and 3 of a content control field correspond to a field indicating whether a ranging block duration (RBD) field is present (i.e., RBDP), a field indicating whether a ranging round duration (RRD) field is present (i.e., RRDP), a field indicating whether a ranging slot duration (RSD) field is present (i.e., RSDP) and a field indicating whether a session ID field is present (i.e., SIP), respectively. Bits 4-7 of a content control field may be reserved.

A RBD field may indicate the duration (RSTU unit) of a ranging block.

A RRD field may indicate the duration of a ranging round (a ranging slot unit, i.e., the number of ranging slots in a ranging round).

A RSD field may indicate the duration (RSTU unit) of a ranging slot.

A SID field may indicate a unique identifier for each controller.

When a ranging block structure is the same as a previously specified duration, at least one of the duration fields (e.g., a RBD field, a RRD field, a RSD field) may not be present in the ACI IE of a current RCM. Even in this case, other fields (e.g., a schedule mode field, a STS packet configuration field, etc.) may be used to update a corresponding ranging parameter.

FIG. 12(b) shows an example of a ranging device management (RDM) IE format.

A RDM IE may be used to exchange scheduling information between ERDEVs for a set of ranging rounds designated in a RCM with the same controller.

A slot index usage (SIU) field may indicate whether to use the slot index of a RDM list element. When a value thereof is 0, a RDM IE may be used to allocate a ranging role (i.e., an initiator or a responder) to controlee(s) for contention-based ranging. When a value thereof is 1, a RDM IE may be used to allocate a time slot and allocate a ranging role to controlee(s) for scheduling-based ranging.

An address size field represents the size of an address used for a RDM list field, and 0 may indicate that a short address (16 bits) is used and 1 may indicate that an extended address (64 bits) is used.

A RDM list length field may indicate the number of RDM list elements.

The ranging role field of a RDM list may indicate an initiator or a responder. The ranging slot index field of a RDM list may indicate a slot index allocated to the device of a corresponding address. The address field of a RDM list may indicate the address of each device participating in ranging.

FIG. 12(c) shows an example of a ranging block update (RBU) IE format.

A RBU IE may be used by a controller to notify controlee(s) of an updated ranging block structure.

A relative ranging block index field may indicate the number of residual ranging blocks according to a current configuration before switching to a new configuration.

An updated block duration field may indicate the duration (RSTU unit) of a new ranging block.

An updated ranging round duration field may indicate a ranging round duration value that is an integer multiple of a ranging slot duration within a new ranging block structure.

An updated ranging slot duration may indicate the duration (RSTU unit) of a ranging slot within a new ranging block structure.

FIG. 12(d) shows an example of a ranging round (RR) IE format.

A ranging block index field may indicate the index of a ranging block.

A hopping mode field may indicate whether a hopping mode is supported for a ranging block.

A round index field may indicate a ranging round index within a ranging block.

A transmission offset field may indicate the value (RSTU unit) of the transmission offset of a ranging round within a block. A transmission offset may have a value obtained by subtracting a packet duration from the maximum value of a slot duration as the maximum value.

For a current ranging round (i.e., a ranging round in a ranging block with a block index of i), a RR IE may be included in the RCM of a ranging block with a block index of i. In this case, a RR IE may correspond to information that an ERDEV supports synchronization for a block structure.

For the next ranging round (i.e., a ranging round in the next ranging block with a block index of i+1), when the last message of a current ranging round (i.e., a ranging block with a block index of i) is transmitted from a controller to controlee(s), a RR IE may be transmitted in a final message to indicate ranging round information for a ranging block with a block index of i+1.

When the last message in a current ranging round (i.e., a ranging block with a block index of i) is transmitted from a controlee, a controller may transmit a RR IE in the RCM of the next ranging block with a block index of i+1 to indicate ranging round information for a ranging block with a block index of i+2.

In this case, a RCM in a ranging block with a block index of i+1 may include two RR IEs. One RR IE may be applied to the ranging round of a ranging block with a block index of i+1, and the other RR IE may be applied to the ranging round of a ranging block with a block index of i+2.

FIG. 12(e) shows an example of a SP3 ranging request reports (SRRR) IE format.

A SRRR IE may be used to request the report of AOA and/or reply time and/or round-trip time measurement from a requestor to a provider.

Each of a requestor address size specifier field and a provider address size specifier field may have a value of 00, 01, 10 and 11 as in Table 1 described above, and may indicate that an address is not present or that a short address (16 bits) or an extended address (64 bits) is used.

A report of AOA (RAOA) field may indicate whether report on AOA is requested.

A report of reply time (RRT) field may indicate whether report on a reply time is requested.

A report of round-trip time (RRTT) field may indicate whether report on a round-trip time is requested.

A report of TOF (RTOF) field may indicate whether report on TOF is requested.

A requestor address field may be set as the address of a device transmitting a signal where AOA is measured or initiating ranging.

A provider address field may be set as the address of a device measuring AOA.

Ranging Block and Round Structure

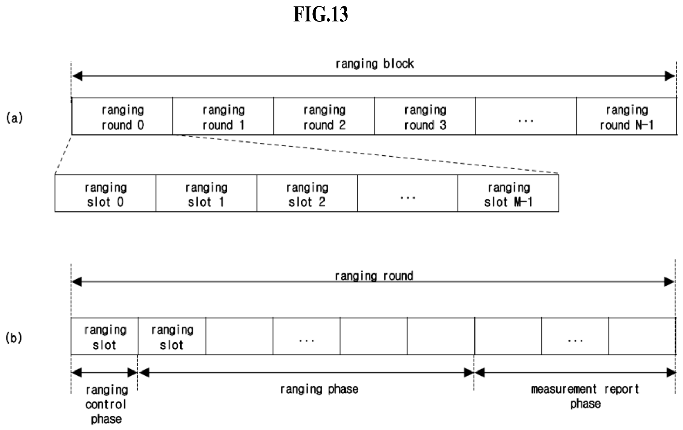

FIG. 13 is a diagram for describing a ranging block structure and a ranging phase to which the present disclosure may be applied.

In FIG. 13(a), a ranging block is a time duration for performing ranging, and one ranging block may include N ranging rounds.

A ranging round corresponds to a sufficient time for ERDEVs participating in ranging exchange to complete a ranging measurement cycle, and one ranging round may include M ranging slots.

A ranging slot may correspond to a time sufficient for transmission of at least one RFRAME.

The number of slots included in a slot duration and a ranging round may be different between ranging rounds. To this end, a controller may transmit a RCM that changes a ranging round configuration to controlee(s).

A ranging control message (RCM) is the first message transmitted by a controller, and may be transmitted in the first slot of a ranging round. A RCM may include configuration information for a ranging parameter.

A ranging control update message (RCUM) corresponds to a message transmitted by a controller in the last slot of ranging round(s) designated by a RCM in order to update a ranging parameter for the next ranging round(s). IE(s) included in a RCM for updating a ranging parameter may be included in a RCUM.

A ranging interval update message (RIUM) corresponds to a message transmitted by a controller to update an interval between ranging blocks and help synchronization between participating ERDEVs. A RCUM may include the scheduled time of the first RIUM, and a RIUM may include the scheduled time of the next RIUM (if used) before the start of the next ranging block.

FIG. 13(b) describes phases in a ranging procedure.

A ranging control phase (RCP) corresponds to a phase where a controller transmits a RCM.

A ranging phase (RP) may include a ranging initiation phase (RIP), a ranging response phase (RRP) and a ranging final phase (RFP).

A RIP corresponds to a phase where an initiator transmits ranging initiation message(s) to responder(s).

A RRP corresponds to a phase where responder(s) transmits response message(s) to an initiator.

A RFP corresponds to a phase where an initiator transmits ranging final message(s) to a responder, and may be used only in DS-TWR.

A measurement report phase (MRP) corresponds to a phase where participating ERDEVs exchange service information related to ranging measurement.

A ranging control update phase (RCUP) corresponds to a phase where a controller transmits a RCUM, and when a RCUP exists, a corresponding phase may be located in the last slot of the set of ranging rounds designated by a RCM.

A ranging interval update phase (RIUP) corresponds to a phase where a controller transmits a RIUM.

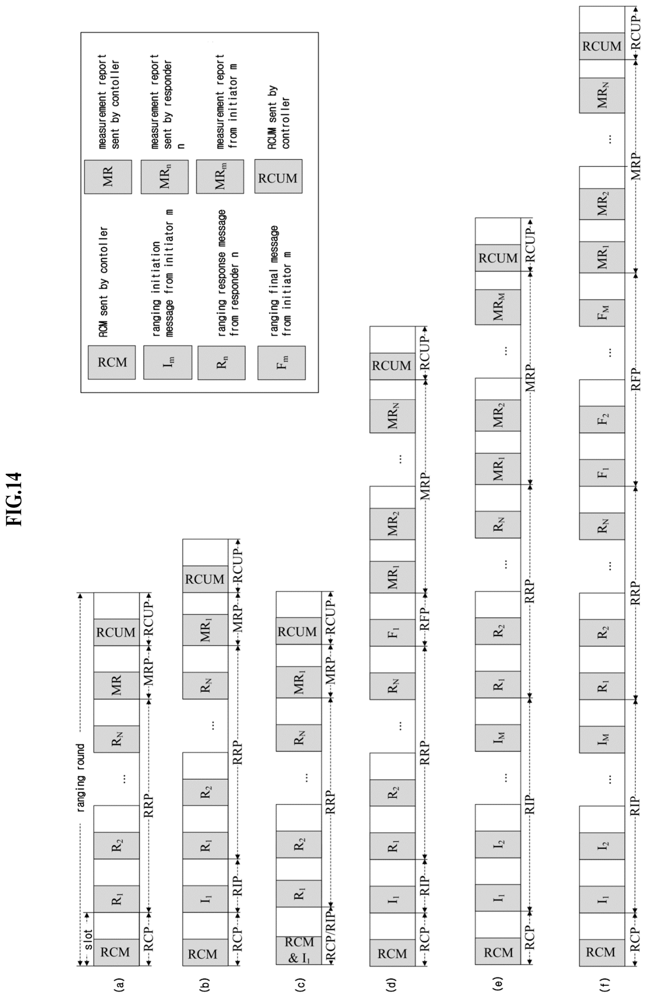

FIG. 14 shows examples of a timing diagram for various multi-device ranging to which the present disclosure may be applied.

FIG. 14(a) corresponds to the example of OWR, FIG. 14(b) corresponds to the example of SS-TWR, FIG. 14(c) corresponds to the example of the combination of a RCP and a RIP in SS-TWR, FIG. 14(d) corresponds to the example of DS-TWR, FIG. 14(e) corresponds to the example of many-to-many SS-TWR and FIG. 14(b) corresponds to the example of many-to-many DS-TWR.

Hereinafter, a ranging mode is described.

In an interval-based mode, the average time of ranging rounds is variable, and a time structure may be applied with adaptive spacing.

In a block-based mode, the average time of ranging rounds is constant. In other words, a ranging block with the same duration may be repeated in a block-based mode.

Ranging mode selection may be determined based on a time structure indicator field within an ARC IE or an OOB mechanism.

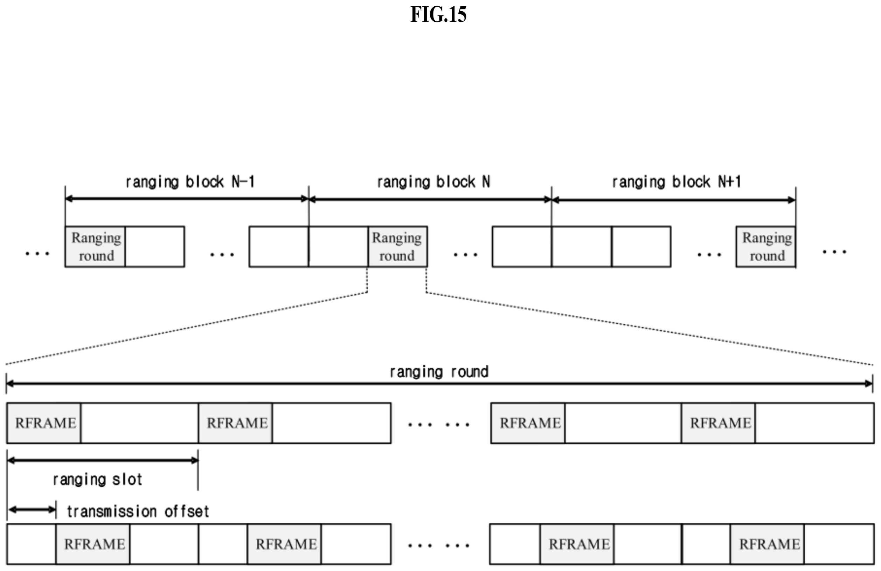

FIG. 15 shows a timing diagram in an example of a block-based mode to which the present disclosure may be applied.

In a block-based mode, a ranging block structure may use a structured timeline. A ranging block structure setup may include designating a ranging block duration (RBD), a ranging round duration (RRD) and a ranging slot duration (RSD) based on the corresponding field of an ARC IE.

The number of ranging rounds corresponds to a value obtained by dividing a ranging block duration by a ranging round duration.

The number of ranging slots corresponds to a value obtained by dividing a ranging round duration by a ranging slot duration.

An ERDEV receiving a RCM may set an associated timeline for ranging based on the value of fields in an initial ranging block structure and an ARC IE. A ranging block structure may be set up and/or fixed by the next higher layer.

A ranging block structure may be transmitted repeatedly by a controller for each RCM (e.g., through an ARC IE). When the change or update of a ranging block structure (i.e., a new ranging block duration, ranging round duration and/or ranging slot duration) is required, a controller may transmit a RBU IE for a new configuration. A RBU IE may be transmitted through a final data frame in a ranging message sequence or a RCM. Whenever a RBU IE is transmitted, a controller may decrease a relative ranging block index one by one until it becomes 0. Accordingly, it may be indicated whether a new configuration will be used in the next block and whether the RCM ARC IE of the next block includes a new configuration.

Hereinafter, indexing is described.

For a ranging block, a block index is given as 0 for the first ranging block, and a relative block index is determined for the remaining blocks by using block index 0 as a reference.

For a ranging round, when N ranging rounds are included in one ranging block, a round index is given as 0 for the first ranging round in a current ranging block, and a relative round index (e.g., 1, ..., M-1) is determined for the remaining N-1 rounds by using round index 0 as a reference.

For a ranging slot, when M ranging slots are included in one ranging round, a slot index is given as 0 for the first ranging slot in a current ranging round, and a relative slot index (e.g., 1, ..., M-1) is determined for the remaining M-1 slots by using slot index 0 as a reference.

The new ranging message exchange may be transmitted/received as the first RCM in the ranging slot with index 0 of the ranging round with index 0 of a ranging block with index 0. In other words, a RCM packet may be transmitted at the start of the first ranging slot of the first ranging round. A RCM may include a RR IE to inform information associated with ranging rounds within a current ranging block.

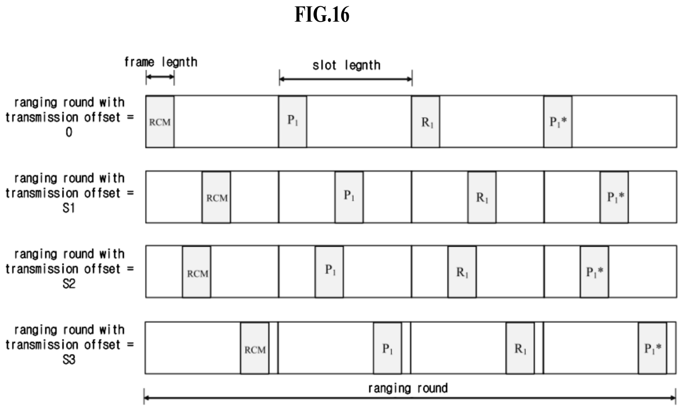

FIG. 16 is a diagram for describing examples of various transmission offsets to which the present disclosure may be applied.

A RR IE included in a RCM may include transmission offset information as information associated with a ranging round within a current ranging block. In subsequent ranging rounds, a controller may start transmission in each slot based on a different transmission offset. A transmission offset may have a value obtained by subtracting an UWB packet duration from a ranging slot duration. A transmission offset may be expressed as a multiple of a RSTU.

A transmission offset may be applied to a ranging round. In other words, the same transmission offset may be applied to all packet transmissions included in the same ranging round. In the next higher layer of a controller, a transmission offset may be selected and communicated to all other devices through a RR IE. A controller may also change a transmission offset for each ranging round based on power that reduces interference.

One-to-many Ranging Procedure

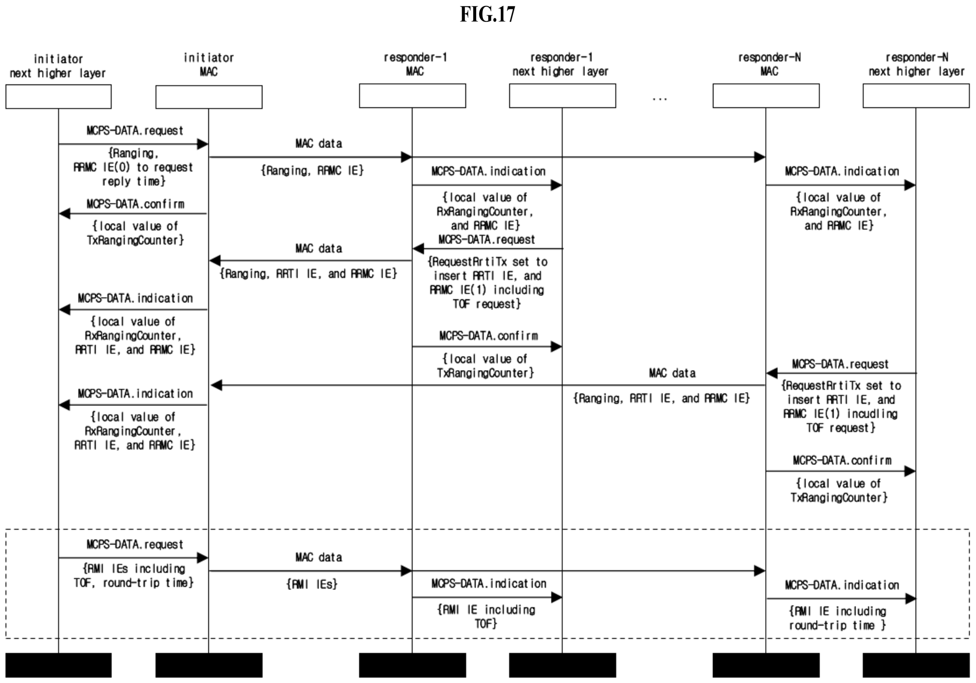

FIG. 17 shows an example of a message sequence chart for one-to-many SS-TWR to which the present disclosure may be applied.

In a ranging procedure for one-to-many TWR, ranging exchange may be initiated by an initiator transmitting a RRMC IE, and a RRMC IE may be included in a ranging initiation message broadcast to multiple responders.

A RRMC IE where a ranging control information field is set as 0 (i.e., RRMC IE(0)) may be transmitted as a SS-TWR ranging initiation message. The reply time request field of a RRMC IE may be set as 1 to request a reply time from a responding ERDEV.

A RRMC IE delivered through a MCPS-DATA.indication primitive from each of the responder-1 to responder-N may give a signal to the next higher layer that must perform a ranging response. Each responder may insert a RequestRrtiTxList parameter into a RRTI IE (as a response to the reply time request of a RRMC IE) and transmit a RRMC IE where a ranging control information field is set as 1 (i.e., RRMC IE(1)) to an initiator. Here, responding RFRAMEs may be transmitted to an initiator in a unicast manner.

When an initiator receives each ranging response frame, an initiator may have sufficient information to calculate the TOF of a corresponding responder.

The final message broadcast by an initiator may include at least one RMI IE(s) for measurement report (when requested by a RRMC IE). A plurality of RMI IEs may be distinguished by a device associated by an address field. For example, responder-1 may set a TOF request field in a RRMC IE as 1, and responder-N may set a round-trip time request field in a RRMC IE as 1. When multiple responders request the same information set like TOF, measurement report from an initiator may be performed through one RMI IE within a final data message.

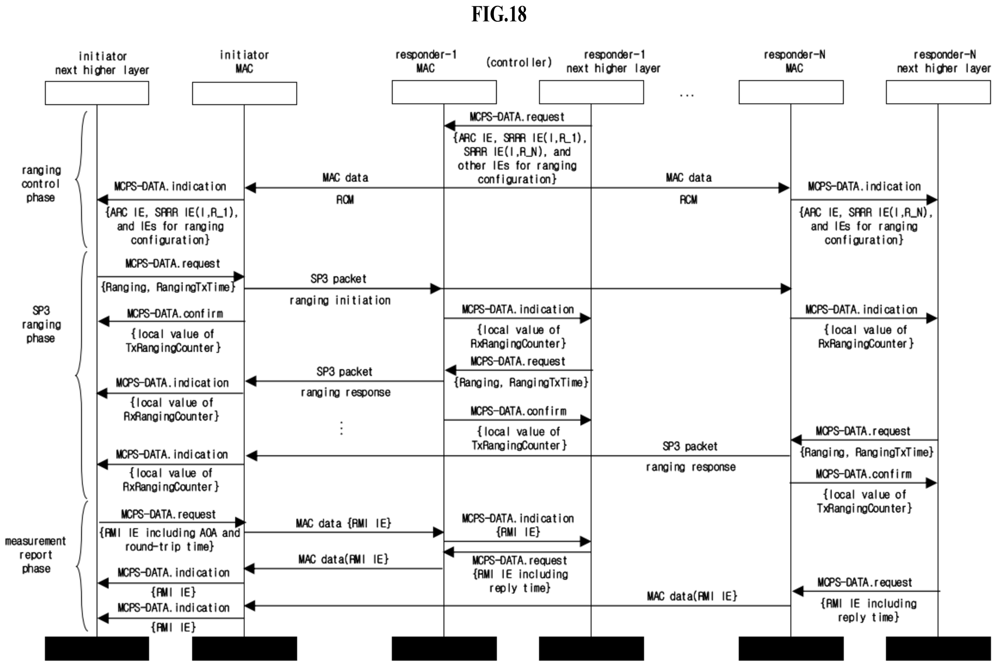

FIG. 18 shows an example of a message sequence chart for SP3 one-to-many SS-TWR to which the present disclosure may be applied.

At the start of a ranging round, a RCM may transmit ranging configuration information and an IE related thereto. A SRRR IE (I, R_1) may set RAOA and RRTT fields as 1 when responder-1 requests AOA and round-trip time from an initiator side.

Multi-node SP3 ranging may be based on scheduling designated by the next higher layer of a controller (i.e., each time slot is allocated to be used in a specific ERDEV).

A RDM IE in a RCM may include information that allocates time slots and device roles within a ranging round. An ARC IE may designate a ranging procedure and a SP3 packet format to make the next higher layer of an ERDEV to recognize the start and end of a SP3 ranging phase and invoke a MLME-STS primitive for enabling/disabling a SP3 packet before/after a ranging phase.

A RSKD IE for exchanging the parts of a STS seed for initializing STS generation between participating ERDEVs may be included in a RCM. According to the scheduling information of ranging transmission, the STS counter value of participating ERDEVs may be appropriately set for transmitting and receiving SP3 packets.

In a SP3 ranging phase, the next higher layer may appropriately set an operation on both sides by using MLME-STS.request to select a SP3 packet format and may set correct values for phyHrpUwbStsKey, phyHrpUwbStsVUpper96 and phyHrpUwbStsVCounter attributes. Since ranging scheduling is designated by a RCM preceding SP3 ranging, a device already knows a participant. Each time slot may be allocated to a specific (E)RDEV.

In a measurement report phase, an initiator may transmit AOA and round-trip time to responder-1 through a RMI IE. Responder-1 to responder-N may embed a requested reply time into a RMI IE sent to an initiator, respectively.

As another example, in the SP3 ranging phase of a message sequence for SP3 one-to-many DS-TWR, after receiving a SP3 frame as a ranging response message from each responder, an initiator may transmit a SP3 frame as a ranging completion message to each responder, through which the local value of an initiator's TxRangingCounter may be delivered to each responder. In a measurement report phase, an initiator may transmit a RMI IE including a reply time and a round-trip time to responders, and for this, each responder may transmit a RMI IE including AOA to an initiator.

Method for defining/applying scheduling information on a block/round basis

The ranging time structure described with reference to FIGS. 13 and 15 has a hierarchical structure of blocks/rounds/slots. Here, each duration is initially set using the ARC IE and may be updated using the RBU IE. In the existing ranging block structure (i.e., block-based mode), ranging blocks of the same length are repeated.

Additionally, the previously discussed scheduling IE is designed only for slot-based scheduling (i.e., slot scheduling). The scheduling IE may be included in a control message (e.g., an RCM IE) transmitted by the controller to each controlee (or responder) participating in the UWB session.

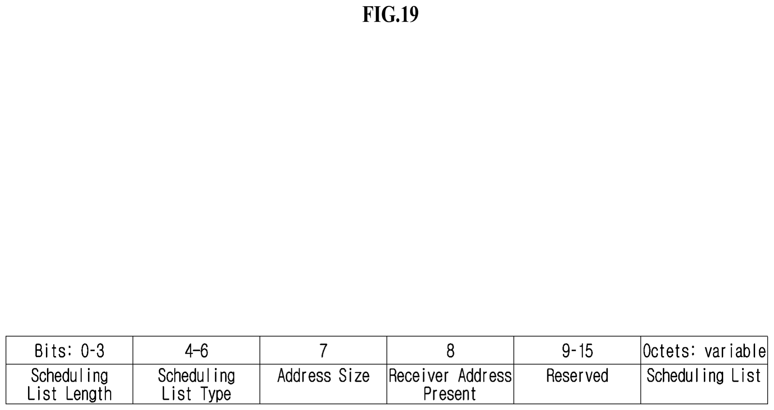

FIG. 19 illustrates the format of a scheduling information element (IE) to which the present disclosure may be applied.

Referring to FIG. 19, the existing scheduling IE format (e.g., the scheduling IE content field format) may include a scheduling list length field, a scheduling list type field, an address size field, a receiver address present field, and a variable-size scheduling list field.

Specifically, the scheduling list length field may indicate the number of elements in the scheduling list field.

The scheduling list type field may specify the format configuration method of the scheduling list field, and the scheduling list type field may indicate one of the values specified in Table 8.

[Table 8]

| Value of Scheduling List Type field | Type of Scheduling List field |
| --- | --- |
| 0 | Per-slot scheduling |
| 1 | Consecutive slot scheduling |
| 2 | Bitmap-based slot scheduling |
| 3 | Periodic scheduling |
| 4 | RSF scheduling |
| 5-7 | Reserved |

Specifically, when per-slot scheduling is used, each scheduling list element may schedule one slot for a device.

When consecutive slot scheduling is used, each scheduling list element may schedule one slot for a device. Since there is no slot index field in the scheduling list element, slots may be scheduled in sequential order. For example, a slot following a slot in which a control message is transmitted may be scheduled for a device specified in the first scheduling list element. There may not be an empty slot between scheduled slots.

When bitmap-based slot scheduling is used, multiple slots may be scheduled for a device using a single scheduling list element. The bitmap of each scheduling list element may represent a pattern of slots scheduled for a single device.

When periodic scheduling is used, multiple slots may be scheduled for a device using a single scheduling list element. The pattern of scheduled slots may be expressed by the number of scheduling repetitions and the size of the scheduling step.

When RSF scheduling is used, multiple slots may be scheduled for a device using a single scheduling list element. In a slot, devices shall transmit an RSF according to the scheduling list element, and the composition of the RSF may be determined by the scheduling list element.

The address size field may specify the sizes of the sender address field and the receiver address field. For the sender address field and the receiver address field, if the address size is 0 (zero), a short address shall be used, and if the address size is 1, an extended address shall be used. Here, a short address may mean a 2-octet-based, i.e., 2-byte-based address, and an extended address may mean an 8-octet-based, i.e., 8-byte-based address.

The receiver address present field may mean the presence of a receiver address field when set to 1, and the absence of a receiver address field when set to 0.

The format of the scheduling list field may be determined by the scheduling list type.

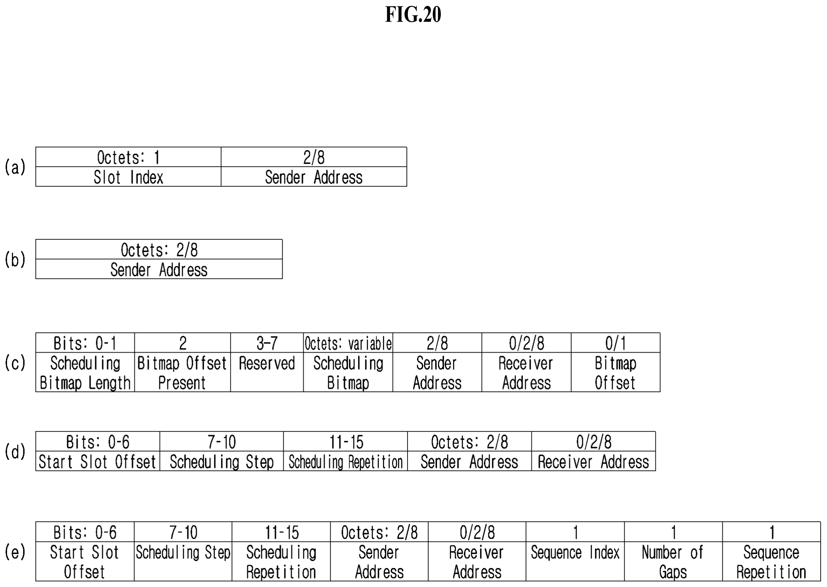

FIG. 20 illustrates the format of a scheduling list element according to the value of the scheduling list type field to which the present disclosure may be applied.

Referring to FIG. 20, FIG. 20(a) illustrates a format of scheduling list element(s) in a case where a value of a scheduling list type field is 0. The format may include a slot index field and a sender address field.

FIG. 20(b) illustrates a format of scheduling list element(s) in a case where a value of a scheduling list type field is 1. The format may include a sender address field.

FIG. 20(c) illustrates a format of scheduling list element(s) in a case where a value of a scheduling list type field is 2. The format may include a scheduling bitmap length field, a bitmap offset presence field, a scheduling bitmap field, a sender address field, a receiver address field, and a bitmap offset field.

FIG. 20(d) illustrates a format of scheduling list element(s) in a case where a value of a scheduling list type field is 3. The format may include a start slot index field, a scheduling step field, a scheduling repetition field, a sender address field, and a receiver address field.

FIG. 20(e) illustrates a format of scheduling list element(s) in a case where a value of a scheduling list type field is 4. The format may include a start slot index field, a scheduling step field, a scheduling repetition field, a sender address field, a receiver address field, a sequence index field, a gap number field, and a sequence repetition field.

As described above, in connection with the above-mentioned scheduling IE, various types of scheduling lists may be provided to devices configuring each slot based on the scheduling list type field.

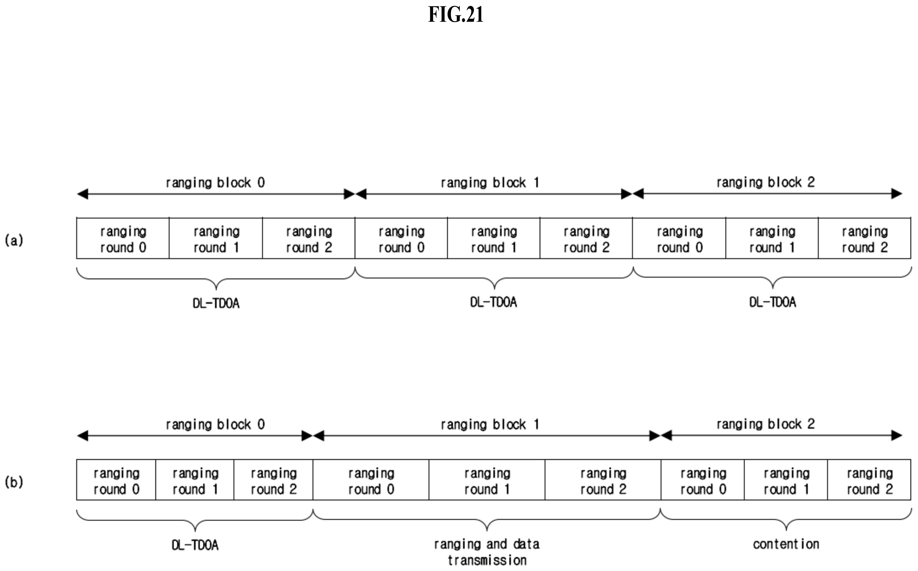

FIG. 21 is a diagram illustrating the difference in time structures for a single application and a combination of multiple applications to which the present disclosure may be applied.

For example, a new time structure in which different blocks are mixed is required to support various applications. For example, a new time structure in which ranging schemes based on different numbers of slots are mixed may be considered for ranging and DL-TDOA. In order to define a flexible time slot that can accommodate this, it is necessary to allow ranging blocks and ranging rounds to have different durations.

The example of FIG. 21(a) corresponds to the example of an indoor localization use case, and a block of the same structure may be repeated.

For a public transportation use case such as the example of FIG. 21(b), a DL-TDOA operation is required for localization when a user approaches a subway gate, and a ranging operation is required when a user selects a specific gate, and contention for access is required when a user approaches a gate first.

In the example of FIG. 21(a), a ranging time structure for a single application (e.g., indoor localization) has the same block duration, and in the example of FIG. 21(b), for a public transportation use case that requires a combination of multiple applications (e.g., DL-TDOA, ranging, contention), localization and ranging may be performed more efficiently by supporting a different block duration. For each application included in the example of FIG. 21(b), each ranging time structure (e.g., scheduling information such as a duration for a ranging block/a ranging round/a ranging slot for a configuration) may be different, and it is necessary to define a higher time structure to accept this as a single service.

Unlike existing UWB wireless networks, which only define fixed-length time structures, there is a need to define a new time structure, i.e., a flexible time structure, that supports various block durations with flexible lengths.

Additionally, regarding the above-mentioned scheduling IE, in order to further enhance gains such as power consumption reduction that can be obtained through scheduling, it may be necessary to perform scheduling not only on a slot basis but also on a round/block basis corresponding to a longer time period. Through this, scheduling suitable for and efficient across the entire time structure of UWB may be enabled.

That is, scheduling information considering a flexible time structure, and scheduling information based on a unit corresponding to a longer time than a slot (e.g., a round or a block) need to be newly defined, and various examples of the present disclosure related to such scheduling information will be described below.

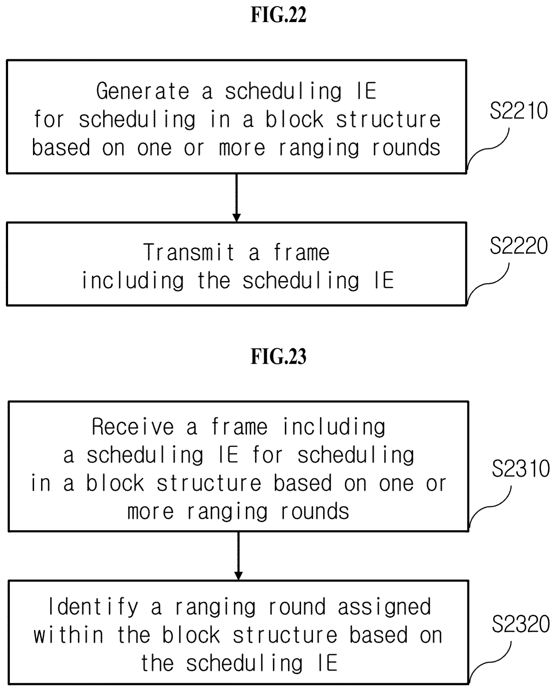

FIG. 22 is a diagram illustrating the operation of a first device according to the present disclosure.

In the example of FIG. 22, the first device may correspond to a controller, and the second device may correspond to a controlee. In addition, the first device and the second device may correspond to ERDEVs.

In step S2210, the first device may generate scheduling information element (IE) for scheduling in a block structure based on one or more ranging rounds.

For example, the block structure may correspond to a general block-based structure or a hyper-block-based structure. As a specific example, when the block structure is configured based on a hyper-block unit composed of one or more ranging blocks, each hyper block may include a plurality of ranging blocks, and durations of the plurality of ranging blocks may be different from each other. In this case, when one ranging block includes a plurality of ranging rounds, durations of the plurality of ranging rounds may be identical.

The scheduling IE may include information indicating a type of scheduling based on a ranging-round unit and scheduling list information related to scheduling based on the ranging-round unit for each device.

In this regard, the scheduling list information may include first information indicating the number of rounds to be scheduled by the scheduling IE. In this case, when information indicating the number of rounds to be scheduled is not included in the scheduling list information, the number of rounds to be scheduled may be recognized/interpreted/understood as corresponding to one. When the number of rounds to be scheduled is one, the scheduling IE may be defined/set to be transmitted for each ranging round.

Additionally or alternatively, the scheduling list information may include second information in the form of a bitmap representing a pattern of scheduled ranging rounds. Each bit constituting the bitmap may correspond to an index of each ranging round within the block structure.

In this regard, the scheduling list information may include third information indicating a length of the bitmap. Here, the length of the bitmap may be set to one of 8 bits, 16 bits, 32 bits, or 64 bits. If the number of ranging rounds to be scheduled by the scheduling IE is smaller than the number of bits constituting the bitmap, bits exceeding the number of ranging rounds to be scheduled among the bits constituting the bitmap may be ignored in the interpretation of the second information.

Additionally or alternatively, the scheduling list information may include fourth information regarding an address of a device. When address indexing based on map information related to the device address is applied, the fourth information may be set as an index according to the address indexing (e.g., a 1-byte-based address index). In this case, information indicating whether the address indexing is applied may be included in the scheduling IE.

In step S2220, the first device may transmit a frame including the generated scheduling IE to one or more second devices.

A timing at which the message/frame including the scheduling IE is transmitted may be predefined (or fixed) or may be determined according to negotiation between a controller and a controlee.

For example, the frame including the scheduling IE may be transmitted in one or more of a part or the whole of a ranging control message (RCM) within the block structure, each ranging round within the block structure, or ranging rounds corresponding to a number of ranging rounds to be scheduled by the scheduling IE within the block structure.

Additionally, the first device may receive, from the second device, a frame including a specific IE (e.g., an SIR IE described below) for soliciting information related to the block structure. Further, in response to the frame including the specific IE, the first device may transmit to the second device one or more of information for the block structure (e.g., an HBS IE) or information for scheduling in the block structure (e.g., scheduling information based on a block/round/slot unit).

The method described in the example of FIG. 22 may be performed by the first device 100 of FIG. 1. For example, one or more processors 102 of the first device 100 of FIG. 1 may be configured to generate a scheduling IE for scheduling in a block structure based on one or more ranging rounds, and to transmit a frame including the scheduling IE to one or more second devices. Furthermore, one or more memories 104 of the first device 100 may store instructions which, when executed by one or more processors 102, cause the device to perform the method described in the example of FIG. 22 or the examples described below.

FIG. 23 is a diagram illustrating the operation of a second device according to the present disclosure.

In step S2310, the second device may receive, from the first device, a frame including a scheduling IE for scheduling in a block structure based on one or more ranging rounds.

Since the specific details regarding the scheduling IE, the block structure (e.g., a general block-based structure, a hyper-block-based structure, etc.), the scheduling list information related to scheduling based on a ranging-round unit, the frame including the scheduling IE, the address map and address indexing based thereon, and the specific IE for soliciting scheduling information are the same as those described in the example of FIG. 22, redundant description will be omitted.

In step S2320, the second device may identify the ranging rounds allocated to the second device within the block structure based on the scheduling IE.

For example, within the above-mentioned block structure (e.g., a general block-based structure, a hyper-block-based structure, etc.), the second device may operate in an active mode during rounds allocated to itself, and may operate in a sleep mode (or inactive mode) during rounds not allocated to itself.

The method described in the example of FIG. 23 may be performed by the second device 200 of FIG. 1. For example, one or more processors 202 of the second device 200 of FIG. 1 may be configured to receive, from the first device, a frame including a scheduling IE for scheduling in a block structure based on one or more ranging rounds, and to identify, based on the scheduling IE, the ranging rounds allocated to the second device within the block structure. Furthermore, one or more memories 204 of the second device 200 may store instructions which, when executed by one or more processors 202, cause the device to perform the method described in the example of FIG. 23 or the examples described below

The examples of FIGS. 22 and 23 may correspond to a part of various examples of the present disclosure. Below, various examples of the present disclosure, including the examples of FIGS. 22 and 23, will be described in more detail.

Specifically, scheduling list types supported by the conventional scheduling IE based on FIG. 19 (e.g., see Table 8) correspond to methods for scheduling on a slot basis, which may be difficult to utilize for scheduling on a round basis and/or block basis. In addition, a procedure in which a controlee (or responder) requests and receives such scheduling information at a desired timing is not defined in the conventional art.

To address these issues, the present disclosure proposes scheduling methods applicable to a flexible time structure/general block time structure (e.g., round scheduling, block scheduling, etc.), and methods/procedures by which a controlee solicits and obtains the scheduling information.

In embodiments described below, the name of an information element supporting a flexible time structure is described by using a HBS IE as a representative example, but embodiments described below may be equally applied even when all or a part of various information described in the present disclosure are included in an IE under names other than a HBS IE.

Embodiment 1

This embodiment relates to a method for defining/configuring a scheduling information element (IE) for scheduling for a hyper block structure.

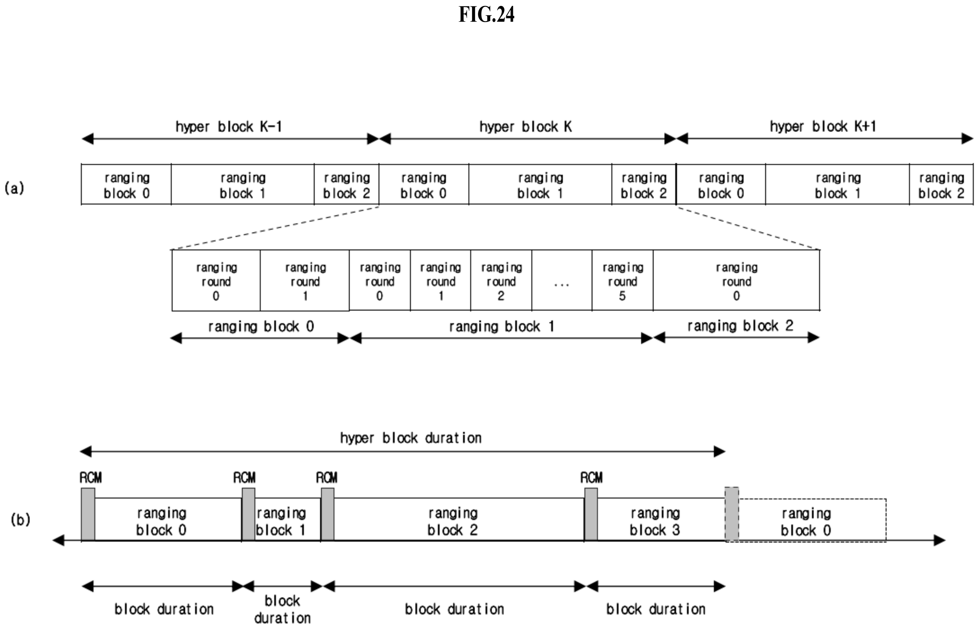

FIG. 24 shows an example of a time structure in a hyper block-based mode according to the present disclosure.

In the example of FIG. 24(a), a hyper block may correspond to a group of blocks. A hyper block-based mode may allow a group of blocks having a different configuration (e.g., a block duration, a round duration, a slot duration, etc.). A hyper block may be performed based on an interval-based mode, or may be performed based on a block-based mode. Different hyper blocks may have the same configuration or a different configuration.

As in the example of FIG. 24(b), information on a configuration for a hyper block structure may be repeatedly transmitted by a controller through a RCM (or a frame including the above-described block allocation schedule information). For this purpose, a hyper block structure (HBS) IE may be defined. For example, a HBS IE may include the index of a corresponding block, a block duration for each of all blocks included in a hyper block, a list of controlees corresponding to each block, etc. A controlee that receives a HBS IE included in a RCM (or a frame including the above-described block allocation schedule information) may know that a hyper block structure is applied/performed, and may know in which block it performs an operation.

In order to perform a hyper block-based mode, a controller may transmit a RCM including a HBS IE (or a frame including the above-described block allocation schedule information) to configure a hyper block for controlee(s). A message/a frame including a HBS IE may be transmitted at a time when the above-described block allocation schedule information is transmitted. An ARC IE may be further included in the RCM (or frame including the above-described block allocation schedule information) of a corresponding block for block configuration.

As described above, a hyper block-based mode may be performed based on a block-based mode or an interval-based mode. When being performed based on an interval-based mode, a controller may use a RIU IE to designate an interval between the start times of a block having the same index in each hyper block. For example, a controller may transmit a RCM including a RIU IE (or a frame including the above-described block allocation schedule information) at the start time of the first block (i.e., block 0) of each hyper block (i.e., the start of slot 0 of round 0 of block 0). Since a RCM (or a frame including the above-described block allocation schedule information) is transmitted at the start time of block 0 in hyper block K including a RIU IE, the block interval field of a RIU IE may indicate the remaining time until the start time of block 0 in hyper block K+1 including a RIU IE.

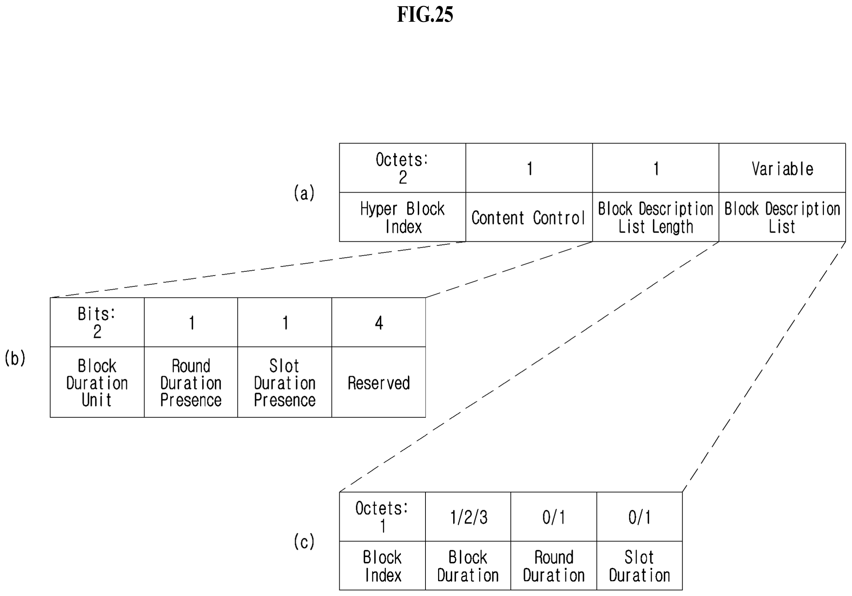

FIG. 25 is a diagram showing an example of a HBS IE format according to the present disclosure.

The scope of the present disclosure is not limited by the name of a HBS IE, and examples in which an IE under other names transmitted through a RCM (or a frame including the above-described block allocation schedule information) includes all or a part of the information fields described below are included in the scope of the present disclosure.

The HBS IE of FIG. 25(a) may include information for the duration of each block within a hyper block and information for the controlee(s) allocated to the corresponding block. The HBS IE may include an associated hyper block index field, a block description list field for all blocks within the hyper block, and a content field. A controlee receiving the HBS IE through the RCM (or a frame including the block allocation schedule information described above) may recognize that a hyper block exists. In addition, the controlee may know which block within the hyper block it belongs to and perform ranging through the controlee list field included in the block description list field.

In the example of FIG. 25(a), a hyper block index field may indicate the index of a hyper block.

A content control field, as in FIG. 25(b), may include a block duration unit field, a round duration presence field within a block description list element and a slot duration presence field within a block description list element.

The block duration unit field of a content control field may indicate the size of a block duration field as follows.

[Table 9]

| The value of a block duration unit field | Meaning |
|---|---|
| 00 | The size of a block duration field is 1 octet, and the unit of a block duration field is the number of rounds. |
| 01 | The size of a block duration field is 2 octets, and the unit of a block duration field is the number of slots. |
| 10 | The size of a block duration field is 3 octets, and the unit of a block duration field is the number of RSTUs. |
| 11 | Reserved |

The round duration presence field of a content control field may indicate that a round duration field exists in a block description list element when its value is 1, and may indicate that it does not exist when its value is 0.

The slot duration presence field of a content control field may indicate that a slot duration field exists in a block description list element when its value is 1, and may indicate that it does not exist when its value is 0.

Referring to FIG. 25(a) again, a block description list length field may indicate the total number of blocks belonging to a hyper block.

A block description list field may include a list of description(s) for each of all blocks belonging to a hyper block.

FIG. 25(c) shows an example of each format of at least one element included in a block description list.

A block index field may indicate the index of a block within a hyper block. The index of a block may correspond to the index of a block associated with a controlee list field within a block description list (i.e., to which a device belonging to a controlee list is allocated).

The size of a block duration field is determined according to the value of the block duration unit field of a content field described above, and may be set as an unsigned integer value indicating a block duration value based on a corresponding unit.

A round duration field may be set as an unsigned integer value corresponding to the number of slots for each round.

A slot duration field may be set as an unsigned integer value corresponding to a slot duration in a RSTU unit.

In order for the controlee to recognize scheduling information of the hyper block, the controller may transmit, to the controlee, a scheduling IE related to scheduling of the hyper block structure together with the HBS IE, included in a control message (e.g., an RCM).

The scheduling IE format (e.g., scheduling IE content field format) may include a scheduling list length field, a scheduling list type field, an address size field, a receiver address present field, and a scheduling list field having a variable size/length.

Specifically, the scheduling list length field may indicate the number of elements of the scheduling list field. For example, the scheduling list field may include scheduling list elements for a number of devices indicated by the length field. That is, each scheduling list element may include scheduling information for one controlee.

The scheduling list type field may specify a configuration method of a format of the scheduling list field, and the scheduling list type field may indicate one of the values specified in Table 10 below.

[Table 10]

| Scheduling list type field value | Type of scheduling list field |
| --- | --- |
| 0 | Per-slot scheduling |
| 1 | Consecutive slot scheduling |
| 2 | Bitmap-based slot scheduling |
| 3 | Periodic scheduling |
| 4 | RSF scheduling |
| 5 | Bitmap-based Block scheduling |
| 6-7 | Reserved |

Referring to Table 10, for scheduling of the aforementioned hyper block structure (i.e., hyper block-based mode) proposed in the present disclosure, in addition to the previously defined scheduling list types (i.e., scheduling list types 0 to 4), a scheduling list type (i.e., scheduling list type 5) for block scheduling in a flexible time structure such as the hyper block proposed in the present disclosure may be newly defined. For example, scheduling information according to scheduling list type 5 may be related to scheduling for one or more blocks within a hyper block (e.g., bitmap-based hyper block scheduling).

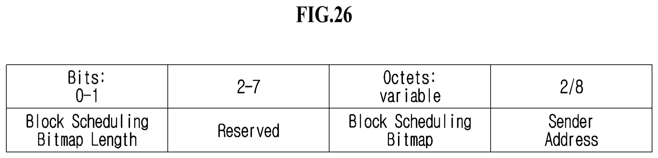

When a scheduling list type field in the scheduling IE is set to a value of 5, a scheduling list element format may be configured as shown in FIG. 26.

FIG. 26 is a diagram illustrating an example of a scheduling list element format related to block scheduling according to an embodiment of the present disclosure.

Referring to FIG. 26, the scheduling list element format according to scheduling list type 5 may include a block scheduling bitmap length field, a block scheduling bitmap field, and a sender address field.

For example, the scheduling list element format may be for block scheduling related to a structure such as a hyper block. In one example, in this case, the block scheduling bitmap length field and the block scheduling bitmap field may also be referred to as a hyper block scheduling bitmap length field and a hyper block scheduling bitmap field, respectively.

Specifically, the block scheduling bitmap length field indicates a size/length of the block scheduling bitmap field, and may be set to one of the values specified in Table 11 below.

[Table 11]

| Block scheduling bitmap length field value | Size of block scheduling bitmap field |
| --- | --- |
| 0 | 8-bit bitmap |
| 1 | 16-bit bitmap |
| 2 | 32-bit bitmap |
| 3 | 64-bit bitmap |

A block scheduling bitmap may be for configuring/indicating block-based scheduling for a structure consisting of one or more blocks (e.g., a hyper block structure) to a device using one scheduling list element. That is, through the block scheduling bitmap, a controller may provide to a controlee information for one or more blocks allocated to the controlee within the block structure.

Specifically, a bitmap in each scheduling list element may indicate a pattern of blocks scheduled to one device. In this regard, a block description list element index of the HBS IE such as in FIG. 25 may be matched with each bit of the bitmap. For example, a first element of the block description list field of the HBS IE may indicate the same block as a first bit of the bitmap information. Based thereon, a device having received the HBS IE and the scheduling IE (e.g., the scheduling IE according to scheduling list type 5) may recognize a block index and a block duration for a block in which the device is to be active.

A sender address may represent each participating device.

As an additional example, a container for block scheduling in a structure such as a hyper block having characteristics similar to the scheduling IE according to scheduling list type 5 may be included in and transmitted by an RCM (or a frame including the aforementioned block allocation schedule information) in the same period as transmission of the HBS IE. If the scheduling IE (e.g., the scheduling IE according to scheduling list type 5) is not transmitted together with the HBS IE, it may indicate that information for block scheduling within a structure such as a hyper block is not included. Additionally or alternatively, if the scheduling IE is not transmitted together with the HBS IE, it may also indicate that a scheduling IE (e.g., the scheduling IE according to scheduling list type 5) most recently received by a device is maintained without being changed. In this regard, the scheduling IE (e.g., the scheduling IE according to scheduling list type 5) may be reused, and the scheduling IE and/or information included in the scheduling IE may be set/defined to have an expired time.

As an additional example, in a hyper block-based mode, a block structure may be scheduled based on a ranging block duration (RBD) field, a ranging round duration (RRD) field and a ranging slot duration (RSD) field included in an ARC IE within a RCM (or a frame including the above-described block allocation schedule information). In this case, since the block duration of blocks within a hyper block may be indicated based on block description list information included in a HBS IE, the RBD field of an ARC IE included in a RCM (or a frame including the above-described block allocation schedule information) transmitted for each block may be omitted, thereby reducing the overhead. When a controller configures scheduling in a hyper block-based mode and transmits a RCM including a HBS IE in which a ranging block duration field and/or a ranging round duration and/or a ranging slot duration field is included (or a frame including the above-described block allocation schedule information), the RBD present (RBDP) bit and/or the RRD present (RRDP) bit and/or the RSD present (RSDP) bit of a content control field may be set as 0 in the ARC IE format of FIG. 12(a), and an ARC IE in which a RBD field and/or a RRD field and/or a RSD field is omitted may be included in a RCM (or a frame including the above-described block allocation schedule information).

Embodiment 1-1

This embodiment is related to a definition/application method of efficient address indexing.

In the case of an existing scheduling IE, an address included in the scheduling IE may be expressed based on a 2-octet short address or an 8-octet extended address.

In this regard, for efficient address indexing, various examples of the present disclosure regarding a new address scheme based on an address map generated/managed by a specific device (e.g., a controller) will be described below.

The address indexing method described in the present embodiment may be equally applied to all scheduling types that can be indicated by the scheduling list type field, as well as to scheduling types related to the hyper block-based mode described above (e.g., scheduling list type 5).

As described above in the present disclosure, a scheduling IE according to scheduling list type 5 may be transmitted per hyper block together with the HBS IE. In this case, a scheduling list element of the scheduling IE may include address information for all devices operating in the hyper block. Based on this information, a controller may generate an address map for devices belonging to the hyper block (e.g., controlees scheduled within the hyper block).

In this case, an index of the address map may be allocated based on a list index of the scheduling list element. Accordingly, an order of the scheduling list elements may need to be maintained unchanged at the controlee side as transmitted by the controller. By using the address map, a sender address field included in a scheduling list element of another type of scheduling IE (e.g., types other than scheduling list type 5) that may be transmitted in each ranging round may be optimized.

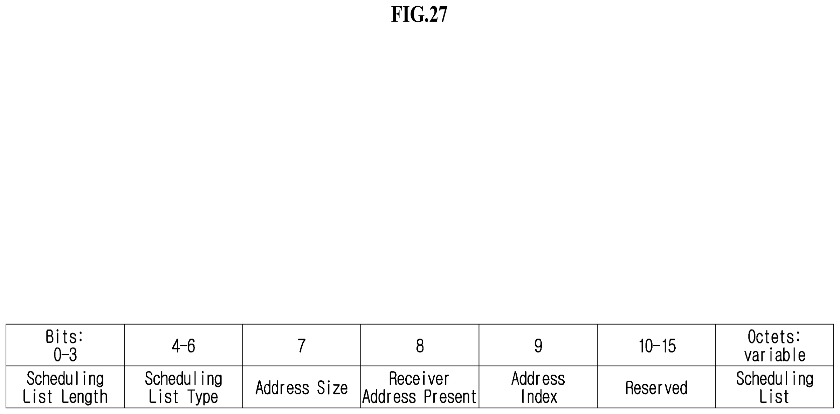

A scheduling IE format for applying the aforementioned address map (e.g., scheduling IE content field format) may be configured as shown in FIG. 27.

FIG. 27 is a diagram illustrating another example of a scheduling information element (IE) format according to the present disclosure.

Referring to FIG. 27, a scheduling IE format for address indexing according to the present disclosure may be defined to further include an address index field/bit in comparison with the scheduling IE format of FIG. 19.

For example, when a value of the address index field/bit is 0, it may indicate that address indexing using the address map is not applied, and when the value is 1, it may indicate that address indexing using the address map is applied.

When the value of the address index field/bit is 1, a sender address in a scheduling list element included in the scheduling IE may be applied based on a sender address index instead of a conventional address form (e.g., 2-octet/8-octet address).

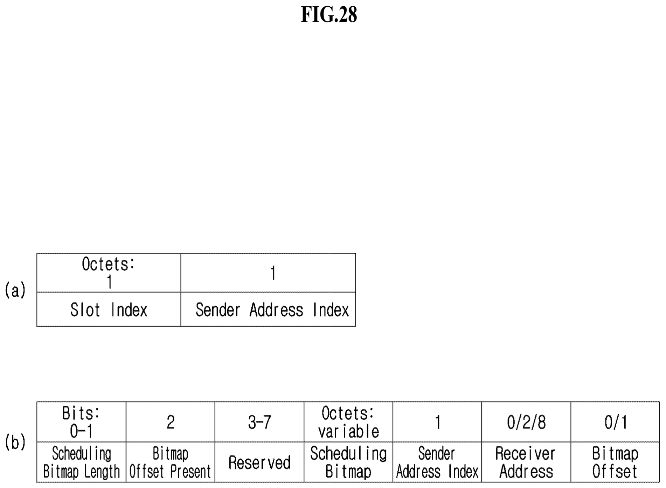

FIG. 28 is a diagram illustrating an example of a scheduling list element format based on address indexing according to the present disclosure.

Referring to FIG. 28, in comparison with the existing scheduling list element format, a 2-octet/8-octet based sender address may be replaced with a 1-octet based sender address index.

For example, with respect to a case where address map-based address indexing is applied, FIG. 28(a) illustrates a scheduling list element format according to scheduling list type 0 (e.g., per-slot scheduling), FIG. 28(b) illustrates a scheduling list element format according to scheduling list type 2 (e.g., bitmap-based scheduling), and FIG. 28(c) illustrates a scheduling list element format according to scheduling list type 5 (e.g., bitmap-based hyper block scheduling).

As described above, with respect to address map-based address indexing, an address index may be applicable not only to a scheduling list type related to a hyper block-based mode (e.g., scheduling list type 5) but also to all scheduling list types.

As an additional example, after a controller transmits a scheduling IE (according to scheduling list type 5) to a controlee and the address map is shared, if the address map (generated based on scheduling list type 5) must change as the controlee is additionally associated with or disassociated from a personal area network (PAN) managed by the controller,, one or more of the following rules may be applied.

- Rule 1. Information regarding the address map and/or related information may be updated when a subsequent scheduling IE (according to scheduling list type 5) is transmitted (e.g., a subsequent hyper block).
- Rule 2. Before the information regarding the address map and/or related information is updated, if a new controlee is associated, the largest index among unreserved indices may be selected and allocated to the new controlee.
- Rule 3. if a controlee in the PAN is deassociated before the information regarding the address map and/or related information is updated, the corresponding reserved index may be maintained as reserved for a predetermined time. In this regard, the reserved index may be maintained for a predetermined time by setting a timer (e.g., a deassociation lifetime cycle timer), and after expiration of the timer, the index may be released for future reuse.
- Rule 4. Regarding changes that occur before the information regarding the address map and/or related information is updated, the controller may manage the address map by applying Rules 2 and 3, and then apply the updated information to a subsequent scheduling IE (according to scheduling list type 5) to share the updated information with the controlee(s).
- Rule 5. An order of a list of scheduling list elements included in a scheduling IE (according to scheduling list type 5) generated by the controller may not be arbitrarily changed.

Embodiment 1-2

This embodiment relates to an example of the use of the above-described hyper-block-based mode.

Although the example in this embodiment is described with a representative example of block scheduling for a hyper block structure, it may be equally applied to other types of structures composed of multiple blocks. For example, in the following description, the hyper block scheduling bitmap length field and hyper block scheduling bitmap field may be replaced with a (different type of) block scheduling bitmap length field and a (different type of) block scheduling bitmap field, respectively.

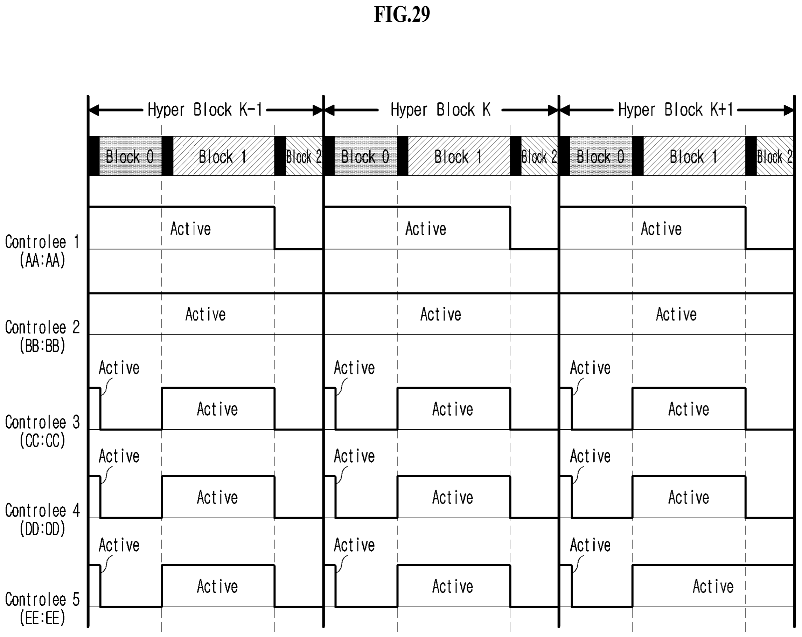

FIG. 29 is a diagram illustrating an example of the operation of a controlee based on hyperblock information according to the present disclosure.

In the hyper-block-based mode, a hyper block, which corresponds to a group of blocks, may include ranging blocks for ranging exchanges with multiple controlees. The controlees may acquire a block index within the hyper block to which they belong, block duration information, and the like, through information in the HBS IE included in the first RCM of the hyper block (or a frame including the above-described block allocation schedule information). Based on this, each controlee may determine a time period during which it operates in an active mode. In the example of FIG. 29, five controlees acquire information included in the HBS IE and the scheduling IE (according to scheduling list type 5) through the RCM (or the frame including the above-described block allocation schedule information) and apply the acquired information to their duty cycle operation.

In the example of FIG. 29, the controller may broadcast an RCM (or a frame including the above-described block allocation schedule information) including the HBS IE (e.g., block duration (or description) list, controlee list, etc.) and the scheduling IE (according to scheduling list type 5) at the start of the first block (block 0) in the hyper block in RAN (ranging area network) 1.

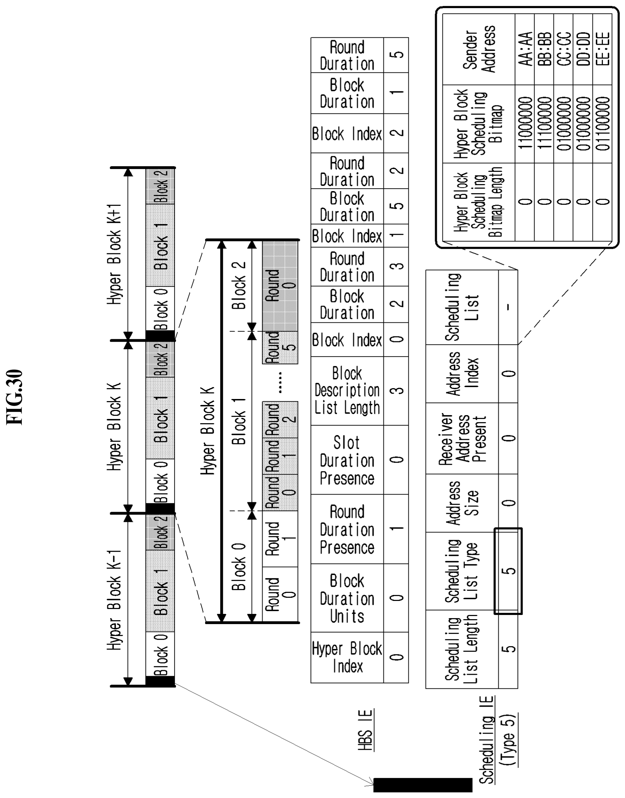

FIG. 30 is a diagram illustrating an HBS IE and a scheduling IE transmitted within a hyper block according to the present disclosure.

Referring to FIG. 30, the HBS IE may include block duration information for all ranging blocks within the hyper block, and round duration information for the ranging rounds belonging to each ranging block. Additionally, a scheduling IE for scheduling the hyper block structure (e.g., based on scheduling list type 5) may include multiple controlee lists (e.g., scheduling lists), and each controlee list may include information regarding the block to which the corresponding controlee belongs/has been assigned in a bitmap format (e.g., hyper block scheduling bitmap).

In order to transmit additional scheduling information within a block, the controller may include an ARC IE in an RCM (or a frame including the above-described block allocation schedule information). Here, since the HBS IE includes a block duration list (or a block description list), and the block duration list (or block description list) may include block duration information (or block duration/round duration/slot duration information), the block duration field (or block duration/round duration/slot duration field) in the ARC IE may be omitted.

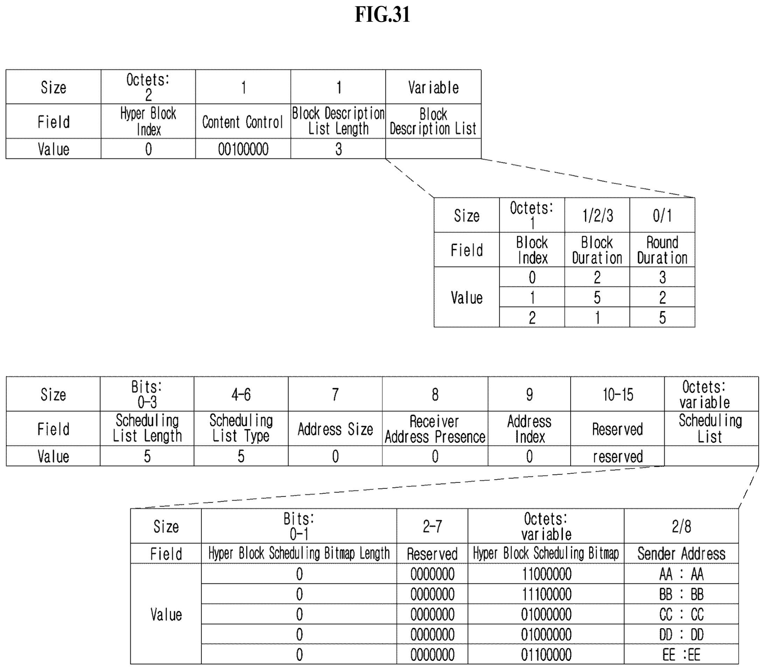

With respect to the hyper block structure, HBS IE and scheduling IE for performing scheduling for multiple controlees are described with a specific example in FIG. 31.

FIG. 31 is a diagram illustrating an IE included in a control message related to a hyper block structure according to the present disclosure.

Referring to FIG. 31, a case where scheduling is performed for five controlees within a hyper block is described.

In this regard, an RCM (or a frame including the above-described block allocation schedule information) transmitted from the controller to the controlees in hyper block n-1 may include an HBS IE as shown in FIG. 31(a) and a scheduling IE as shown in FIG. 31(b).

Referring to FIG. 31(b), a scheduling IE set to a bitmap-based hyper-block scheduling type (e.g., scheduling list type 5) may include hyper-block scheduling information for each controlee, i.e., a scheduling list element. In this regard, since the example of FIG. 31(b) is a case where the address indexing described above in the present disclosure is not applied (i.e., the value of the address index field is 0), the address information included in each scheduling list element is based on the existing address scheme.

By receiving the information in the HBS IE and the scheduling IE (e.g., according to scheduling list type 5) included in the RCM (or the frame including the above-described block allocation schedule information), each controlee may recognize/determine the block index to which it belongs within the hyper block, the duration of the corresponding block, and the duration of other blocks.

For example, controlee 1 (AA:AA) may recognize/determine that it belongs to the first block (Block 0) and the second block (Block 1) from the hyper block scheduling bitmap in the scheduling IE. Additionally, controlee 1 may obtain the block duration for each block from the block description list in the HBS IE (e.g., since the block duration unit is 00, it is in ranging round units), and by matching with the first index (block index 0) and the second index (block index 1), it may recognize that its block durations are two rounds and five rounds, respectively. Based thereon, for controlee 1, a duty cycle may be configured to maintain an active state during the time corresponding to the first and second blocks and to maintain a sleep state during the time corresponding to the third block.

In order to calculate the block duration time in the RCM (or the frame including the above-described block allocation schedule information), the controlees may obtain ranging round duration in the ARC IE and/or round/slot duration information in the block description list of the HBS IE.

Accordingly, controlee 1 may recognize/determine that it belongs to block 0 and block 1, and may be scheduled to maintain a sleep (or deep sleep) mode during the time corresponding to block 2.

Controlee 2 may recognize/determine that it belongs to block 0, block 1, and block 2, and may maintain an active mode at all times.

Controlees 3 and 4 may recognize/determine that they belong to block 1 and may be scheduled to maintain a sleep (or deep sleep) mode during the time corresponding to block 0 and block 2.

Controlee 5 may recognize/determine that it belongs to block 1 and block 2, and may be scheduled to maintain a sleep (or deep sleep) mode during the time corresponding to block 0.

In order to check whether there is an update of control information (e.g., HBS IE, scheduling IE according to scheduling list type 5, ARC IE, etc.) in the next hyper block, the controlees may maintain an active state for a specific time (e.g., during the first ranging round of the first block of each hyper block) to receive the RCM (or the frame including the above-described block allocation schedule information) at the start of each hyper block. Thereafter, the controlees (e.g., controlee 1 to controlee 5) may repeatedly perform the above-described scheduling operations.

Additionally or alternatively, the scheduling IE transmitted together with the HBS IE (e.g., the scheduling IE according to scheduling list type 5) may include address information for all devices belonging to the hyper block. In this regard, it is possible to generate an address map using the address information and to perform address indexing based on the address map. For example, the controller may generate/manage an address map for all devices belonging to the hyper block.

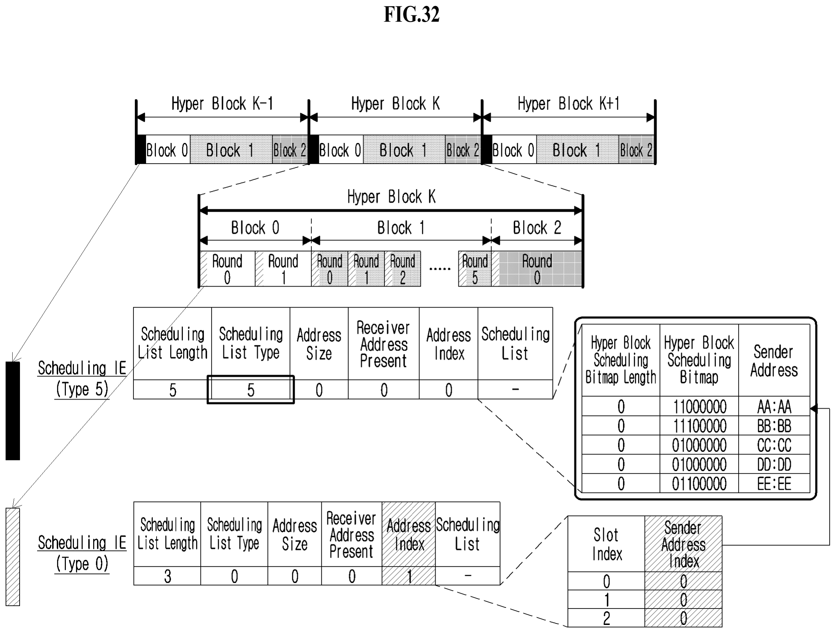

FIG. 32 is a diagram illustrating a scheduling IE based on address indexing according to the present disclosure.

Referring to FIG. 32, the address map-based address indexing may be applied not only to address information of a scheduling IE of a scheduling list type related to the hyper block structure, but also to address information of other types of scheduling IEs.

For example, in each round within the hyper block structure, the address index field of a scheduling IE transmitted (e.g., scheduling IE according to scheduling list type 0) may be set to 1. In this case, the address information included in the scheduling list elements in the scheduling IE may be configured based on the sender address index. In this case, with respect to address information, a method of obtaining an address by referencing an address map based on a scheduling IE (e.g., a scheduling IE according to scheduling list type 5) transmitted together with the HBS IE in the first round of the first block within the hyper block may be applied. In this manner, the method of transmitting including the sender address index based on the aforementioned address map (e.g., 1-octet/byte information) has a technical effect of being 1-byte optimized compared to the method of transmitting the existing sender address (e.g., 2/8-octet/byte information).

Additionally or alternatively, as in the examples of the location of the RCM (or the frame including the aforementioned block allocation schedule information) of FIGS. 30 and 32, the RCM (or the frame including the aforementioned block allocation schedule information) including the HBS IE and the scheduling IE (e.g., the scheduling IE based on the scheduling list type 5 associated with the hyper block structure) according to the present disclosure may be transmitted in the first ranging round for each ranging block of each hyper block. Alternatively, the RCM (or the frame including the aforementioned block allocation schedule information) including the HBS IE and the scheduling IE according to the present disclosure may be transmitted in a specific (e.g., first) ranging round for each of some of the ranging blocks of each hyper block.

Embodiment 2

The scheduling IE in the above-mentioned Embodiment 1 may be an improved scheduling IE for scheduling in a flexible time structure, that is, a hyper-block-based mode, in addition to slots.

This embodiment relates to a method of improving/defining/applying the scheduling IE to enable scheduling on slot, round, and block units, which are UWB time structures, from the perspective of generalization.

To support block-based scheduling and round-based scheduling, a value of a scheduling list type field included in the scheduling IE may be defined as shown in Table 12.

[Table 12]

| Value of Scheduling List Type field | Type of Scheduling List field |
|---|---|
| 0 | Per-slot scheduling |
| 1 | Consecutive slot scheduling |
| 2 | Bitmap-based slot scheduling |
| 3 | Periodic scheduling |
| 4 | RSF scheduling |
| 5 | Bitmap-based block scheduling |
| 6 | Bitmap-based round scheduling |
| 7 | Reserved |

Referring to Table 12, in addition to conventional scheduling list types 0 to 4 (e.g., see Table 8), bitmap-based block scheduling (scheduling list type 5) and bitmap-based round scheduling (scheduling list type 6) may be further defined.

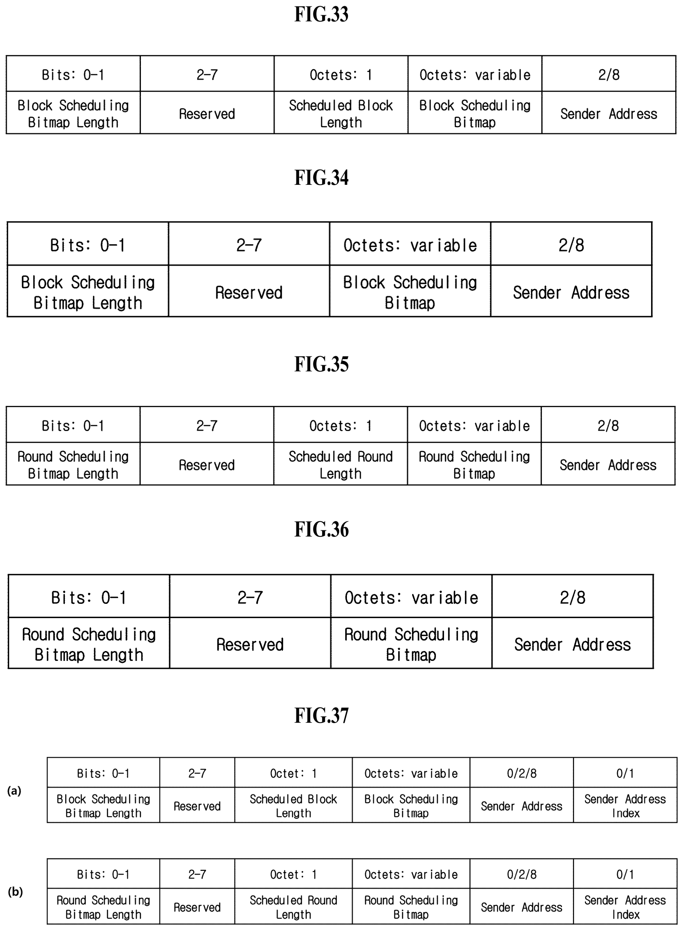

When the scheduling list type field is 5, the scheduling list format may be configured as shown in FIG. 33.

FIG. 33 illustrates an example of a scheduling list element format for bitmap-based block scheduling according to the present disclosure.

Referring to FIG. 33, a scheduling list element format according to scheduling list type 5 of Table 12 may include a block scheduling bitmap length field, a scheduled block length field, a block scheduling bitmap field, and a sender address field.

The block scheduling bitmap length field indicates a length of the block scheduling bitmap and may be set/defined based on Table 13.

[Table 13]

| Value of Block Scheduling Bitmap Length field | Size of Block Scheduling Bitmap field |
|---|---|
| 0 | 8-bit bitmap |
| 1 | 16-bit bitmap |
| 2 | 32-bit bitmap |
| 3 | 64-bit bitmap |

The scheduled block length field indicates the number of blocks to be scheduled by the scheduling IE. For example, setting the scheduled block length to 6 may mean that the scheduling IE schedules six blocks starting from the current block.

The block scheduling bitmap may enable a device using a single scheduling list element to schedule one or more blocks.

Specifically, the bitmap within each scheduling list element may represent a pattern of blocks scheduled for a single device. For example, the first block (e.g., Block 0) may correspond to the first bit of the bitmap, the second block (e.g., Block 1) may correspond to the second bit of the bitmap, and the N-th block (e.g., Block N-1) may correspond to the N-th bit of the bitmap.

By combining the bitmap information and the information regarding the scheduled block length, a device receiving a scheduling IE according to scheduling list type 5 may determine block indices and block durations in which it will be activated. When the bitmap length is greater than the scheduled block length, bits exceeding the scheduled block length may be ignored.

The sender address may represent each participating device.

Additionally or alternatively, when supporting a flexible time structure (e.g., a hyper-block-based structure), information related to the scheduled block length may be obtained through another IE (e.g., an HBS IE). Considering this, a scheduling list element format as shown in FIG. 34 may be configured.

FIG. 34 illustrates another example of a scheduling list element format for bitmap-based block scheduling according to the present disclosure.

Referring to FIG. 34, compared to the scheduling list element format of FIG. 33, the scheduled block length field is omitted, and meanings/definitions of the other fields are the same as those in FIG. 33.

As described above, the scheduled block length may be obtained through another IE (e.g., an HBS IE).

If a flexible time structure (e.g., a hyper-block-based structure) is not supported and block-related information such as the HBS IE is not known, the scheduled block length may be determined/considered/set as 1.

The block scheduling bitmap may enable a device using a single scheduling list element to schedule one or more blocks.

Specifically, the bitmap within each scheduling list element may represent a pattern of blocks scheduled for a single device. For example, the first block (e.g., Block 0) may correspond to the first bit of the bitmap, the second block (e.g., Block 1) may correspond to the second bit of the bitmap, and the N-th block (e.g., Block N-1) may correspond to the N-th bit of the bitmap.

By combining the bitmap information and the information regarding the scheduled block length, a device receiving a scheduling IE according to scheduling list type 5 may determine block indices and block durations in which it will be activated. When the bitmap length is greater than the scheduled block length, bits exceeding the scheduled block length may be ignored.

For example, when there are five blocks based on an HBS IE, the block scheduling bitmap length may be set to 0, and the block scheduling bitmap may be composed of 8 bits. In this case, the first five bits of the bitmap are mapped to block indices within the hyper block to set the scheduling information, and the remaining three bits may be ignored. In contrast, when a hyper-block-based structure is not supported, the scheduled block length may be one, only the first bit of the block scheduling bitmap is used for scheduling, and the remaining bits may be ignored.

When the scheduling list type field is 6, the scheduling list format may be configured as shown in FIG. 35.

FIG. 35 illustrates an example of a scheduling list element format for bitmap-based round scheduling according to the present disclosure.

Referring to FIG. 35, a scheduling list element format according to scheduling list type 6 of Table 12 may include a round scheduling bitmap length field, a scheduled round length field, a round scheduling bitmap field, and a sender address field.

The round scheduling bitmap length field indicates a length of the round scheduling bitmap and may be set/defined based on Table 14.

[Table 14]

| Value of Round Scheduling Bitmap Length field | Size of Round Scheduling Bitmap field |
| --- | --- |
| 0 | 8-bit bitmap |
| 1 | 16-bit bitmap |
| 2 | 32-bit bitmap |
| 3 | 64-bit bitmap |

The scheduled round length field indicates the number of rounds to be scheduled by the scheduling IE. For example, setting the scheduled round length to 6 may mean that the scheduling IE schedules six rounds starting from the current round.

The round scheduling bitmap may enable a device using a single scheduling (round) list element to schedule one or more rounds.

Specifically, the bitmap within each scheduling list element may represent a pattern of rounds scheduled for a single device. For example, the first round (e.g., Round 0) may correspond to the first bit of the bitmap, the second round (e.g., Round 1) may correspond to the second bit of the bitmap, and the N-th round (e.g., Round N-1) may correspond to the N-th bit of the bitmap

By combining the bitmap information and the information regarding the scheduled round length, a device receiving a scheduling IE according to scheduling list type 6 may determine the round indices in which it will be activated. When the bitmap length is greater than the scheduled round length, bits exceeding the scheduled round length may be ignored.

The sender address may represent each participating device.

Additionally or alternatively, similarly to the above-mentioned bitmap-based block scheduling, a scheduling list element format such as that shown in FIG. 36, in which the scheduled block length field is omitted, may be configured. Based on this, a device may be scheduled to determine whether it operates in the current round.

FIG. 36 illustrates another example of a scheduling list element format for bitmap-based round scheduling according to the present disclosure.

Referring to FIG. 36, compared to the scheduling list element format of FIG. 35, the scheduled round length field is omitted, and meanings/definitions of the other fields are the same as those in FIG. 35.

When a scheduling list element format such as that shown in FIG. 36 is applied, the scheduled round length may be determined/considered/set as 1. The round scheduling bitmap may enable a device using a single scheduling list element to schedule the current round. In this case, only the first bit of the round scheduling bitmap is used, and the remaining bits may be ignored.

Additionally, regarding the above-mentioned bitmap-based block scheduling and/or bitmap-based round scheduling, the address indexing method described in the present disclosure (e.g., the address indexing method of Embodiment 1-1) may be applied.

Specifically, when a scheduling IE according to scheduling list type 5 is transmitted, the scheduling list element of the scheduling IE may include address information of all devices operating in blocks corresponding to the scheduled block length indicated in the scheduling list. Additionally or alternatively, when a scheduling IE according to scheduling list type 6 is transmitted, the scheduling list element of the scheduling IE may include address information of all devices operating in rounds corresponding to the scheduled round length indicated in the scheduling list. Using this information, an address map for devices included in the scheduled blocks/rounds may be generated.

In this case, indices of the address map may be allocated based on the list indices of the scheduling list elements. Therefore, the order of the scheduling list elements may need to be maintained without being changed at the controlee side after being transmitted by the controller. Using the address map, the sender address field within scheduling list elements included in other types of scheduling IEs (e.g., types other than scheduling list types 5 and 6) that may be transmitted in each block/round may be optimized.

For example, in a scheduling IE format for applying an address map, an address index field/bit may be added compared to the scheduling IE format shown in FIG. 19. When the value of the address index field/bit is 0, it may indicate that address indexing using the address map is not used, and when the value is 1, it may indicate that address indexing using the address map is used.

Specifically, when the value of the address index field/bit is 1, the sender address within the scheduling list element included in the scheduling IE may be applied based on the sender address index, rather than the conventional address format (e.g., 2-octet/8-octet address)

FIG. 37 is a diagram illustrating an example of a scheduling list element format based on address indexing according to the present disclosure.

Referring to FIG. 37, compared to the conventional scheduling list element format, a 2-octet/8-octet-based sender address may be replaced with a 1-octet-based sender address index.

FIG. 37(a) illustrates a scheduling list element format when the scheduling list type is 5, and compared to FIG. 33, a sender address index field may be additionally applied.

FIG. 37(b) illustrates a scheduling list element format when the scheduling list type is 6, and compared to FIG. 35, a sender address index field may be additionally applied.

Embodiment 2-1

This embodiment relates to an example of using block/round scheduling in the above-mentioned general block-based mode.

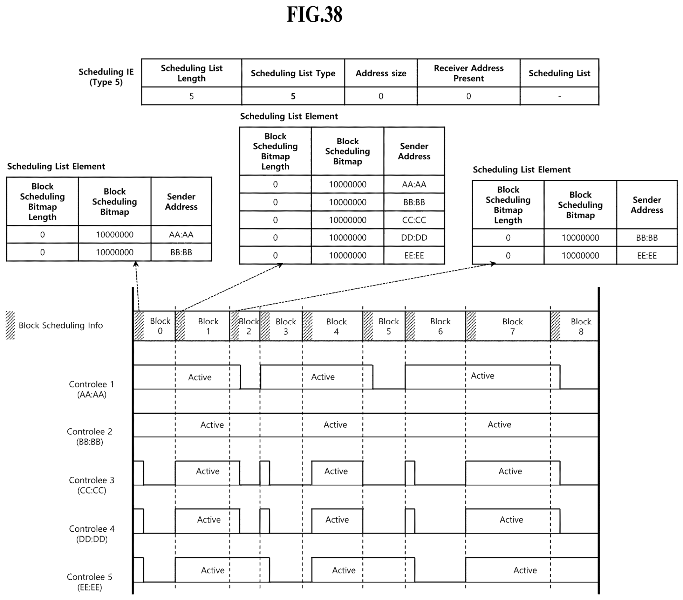

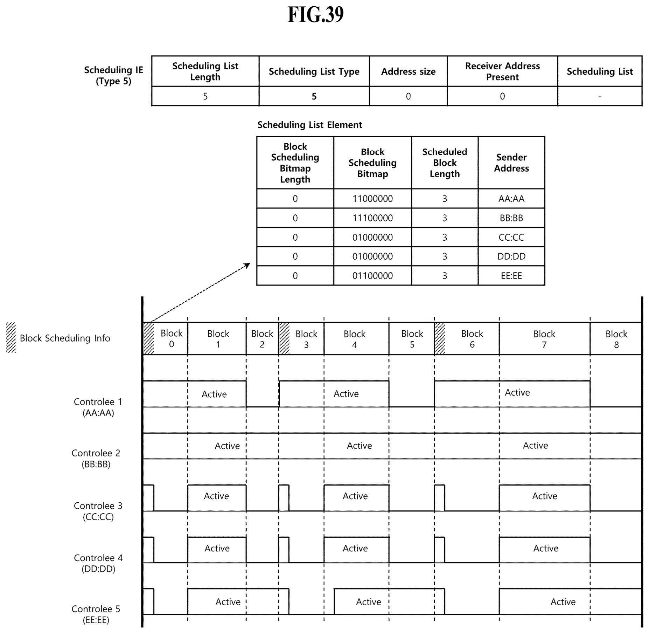

First, an example of using block scheduling is described with reference to FIGS. 38 and 39. In FIGS. 38 and 39, lengths of blocks are shown as partially different; however, the method proposed in the present disclosure and the description in these figures may equally apply when all block lengths are set to be the same.

FIG. 38 is a diagram illustrating an example of an operation of a controlee based on block scheduling information in a general block-based mode according to the present disclosure.

Referring to FIG. 38, when the scheduled block length field does not exist in a scheduling list element format according to scheduling list type 5 related to block scheduling, the controller may transmit a scheduling IE according to scheduling list type 5 for each block. The scheduling IE may include a scheduling list related to scheduling for the corresponding block. Based on the received scheduling list, the controlee(s) may determine whether they belong to the corresponding block and perform active/sleep operations.

For example, based on the scheduling list element format shown in FIG. 38, controlees operating in Block 0 may be AA:AA and BB:BB, controlees operating in Block 1 may be AA:AA, BB:BB, CC:CC, DD:DD, and EE:EE, and controlees operating in Block 2 may be BB:BB and EE:EE.

FIG. 39 is a diagram illustrating another example of an operation of a controlee based on block scheduling information in a general block-based mode according to the present disclosure.

Referring to FIG. 39, when the scheduled block length field exists in a scheduling list element format according to scheduling list type 5 related to block scheduling, the controller may transmit a scheduling IE according to scheduling list type 5 for every number of blocks corresponding to the configured scheduling count. The scheduling IE may include a scheduling list related to scheduling for the corresponding block(s). Based on the received scheduling list, the controlee(s) may determine/identify the block(s) to which they belong among the corresponding block(s) and perform active/sleep operations.

For example, based on the scheduling list element format shown in FIG. 39, for Blocks 0 to 2, controlee AA:AA may operate in Blocks 0 and 1, controlee BB:BB may operate in Blocks 0, 1, and 2, controlee CC:CC may operate in Block 1, controlee DD:DD may operate in Block 1, and controlee EE:EE may operate in Blocks 1 and 2.

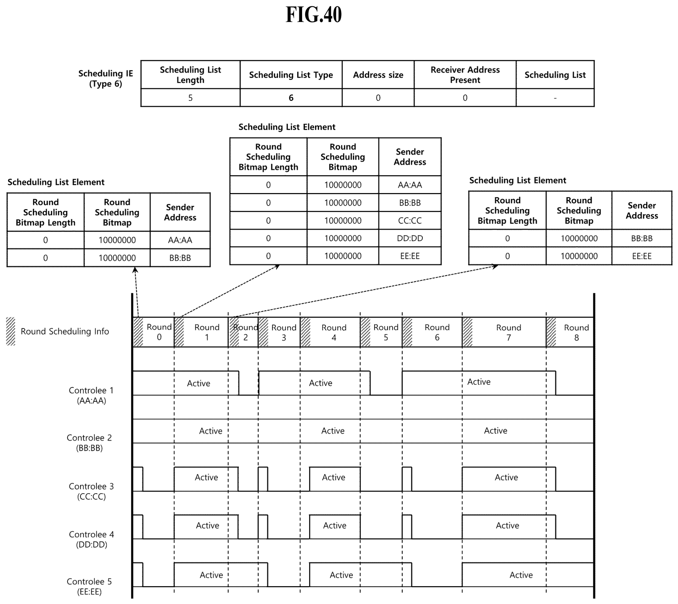

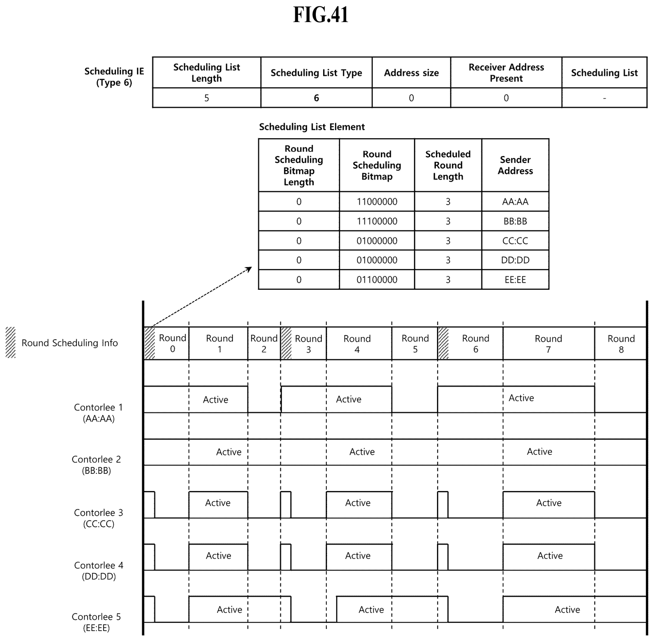

Next, an example of using round scheduling is described with reference to FIGS. 40 and 41. In FIGS. 40 and 41, lengths of blocks are shown as partially different; however, the method proposed in the present disclosure and the description in these figures may equally apply when all round lengths are set to be the same.

FIG. 40 is a diagram illustrating the other example of an operation of a controlee based on round scheduling information in a general block-based mode according to the present disclosure.

Referring to FIG. 40, when the scheduled round length field does not exist in a scheduling list element format according to scheduling list type 6 related to round scheduling, the controller may transmit a scheduling IE according to scheduling list type 6 for each round. The scheduling IE may include a scheduling list related to scheduling for the corresponding round. Based on the received scheduling list, the controlee(s) may determine whether they belong to the corresponding round and perform active/sleep operations.

For example, based on the scheduling list element format shown in FIG. 40, controlees operating in Round 0 may be AA:AA and BB:BB, controlees operating in Round 1 may be AA:AA, BB:BB, CC:CC, DD:DD, and EE:EE, and controlees operating in Round 2 may be BB:BB and EE:EE.

FIG. 41 is a diagram illustrating another example of an operation of a controlee based on round scheduling information in a general block-based mode according to the present disclosure.

Referring to FIG. 41, when the scheduled round length field exists in a scheduling list element format according to scheduling list type 6 related to round scheduling, the controller may transmit a scheduling IE according to scheduling list type 6 for every number of rounds corresponding to the configured scheduling count. The scheduling IE may include a scheduling list related to scheduling for the corresponding round(s). Based on the received scheduling list, the controlee(s) may determine/identify the round(s) to which they belong among the corresponding round(s) and perform active/sleep operations.

For example, based on the scheduling list element format shown in FIG. 41, for Rounds 0 to 2, controlee AA:AA may operate in Rounds 0 and 1, controlee BB:BB may operate in Rounds 0, 1, and 2, controlee CC:CC may operate in Round 1, controlee DD:DD may operate in Round 1, and controlee EE:EE may operate in Rounds 1 and 2.

Embodiment 3

The present embodiment relates to a method in which a controlled device solicits scheduling information, and a controller transmits relevant information in response to the solicitation.

The scheduling IE may be transmitted on a round basis during a UWB control phase. In the case of a scheduling IE according to scheduling list type 5 (i.e., bitmap-based round scheduling type) and/or scheduling list type 6 (i.e., bitmap-based round scheduling type) of Table 12, the scheduling IE may, in some cases, be transmitted only once across multiple blocks depending on the length of the scheduled round. In addition, when operating in a hyper block-based mode, an HBS IE and a scheduling IE (i.e., the scheduling IE according to scheduling list type 5 of Table 10) may be transmitted in the first round of the first block of a hyper block.

In relation with such a case, during a scheduling operation for slot(s)/block(s)/round(s) or during a scheduling operation for a hyper block, there may exist a controlee (or responder) that newly joins or a controlee that has failed to receive the scheduling IE. In such a case, the controlee may not possess slot/block/round scheduling information until the next scheduling is set. Furthermore, it may also occur that information such as an address map, which may be obtained based on slot/block/round scheduling information, may not be obtained.

Accordingly, it is necessary to provide a method by which a controlee solicits to a controller scheduling information for slot/block/round and/or information for a hyper block structure (e.g., HBS IE), so as to acquire information related thereto.

In this regard, in the present disclosure, an IE for the controlee to solicit such information (hereinafter referred to as a Scheduling Information Request (SIR) IE for clarity of description) may be defined.

Specifically, the controlee may solicit scheduling information to the controller through the SIR IE, and upon receiving the solicitation, the controller may be configured/defined to transmit to the controlee information for time structure (e.g., hyper block-based structure, general block-based structure, etc.) and device scheduling. In this case, the controller may deliver/provide the information through HBS IE, scheduling IE, ARC IE, RDM IE, RR IE, and the like. The controlee that receives the corresponding information from the controller may acquire, based thereon, its own scheduling information, information related to an address map for address indexing, and the like. Through this, the controlee may proactively acquire and utilize the information before the controller announces the next configuration.

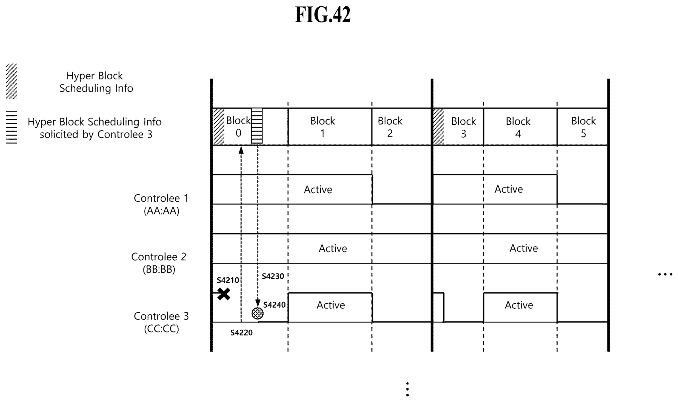

FIG. 42 is a diagram showing an example of an operation based on a scheduling information request IE according to the present disclosure.

Referring to FIG. 42, a case will be described on the assumption that, in a hyper block-based structure, a controller transmits an HBS IE and a scheduling IE (e.g., a scheduling IE according to scheduling list type 5 of Table 10) to one or more controlees in the first round of the first block within each hyper block.

For example, the controller may transmit the HBS IE and the scheduling IE to the controlees through a first control message (e.g., an RCM, etc.) in the hyper block. In this case, a specific controlee (e.g., controlee CC:CC) may fail to receive the HBS IE and/or the scheduling IE, and the corresponding controlee may fail to perform its operation because it cannot interpret address (index) information included in or based on the scheduling IE (S4210).

In this case, the controlee may recognize that it requires scheduling information, and based thereon, may request/solicit scheduling information from the controller through an SIR IE (S4220).

The controller that has received the SIR IE may transmit to the controlee, in the control phase of the next round, a control message (e.g., an RCM, etc.) including an HBS IE and/or a scheduling IE (S4230).

The controlee that has received the corresponding control message may acquire scheduling information and information related to an address map, and may recover its operation (S4240).

A RCM (or a frame including the above-described block allocation schedule information) including a HBS IE and/or a scheduling IE according to the present disclosure may have a narrowband PPDU format based on an offset quadrature phase-shift keying (O-QPSK) PHY (e.g., a PPDU format including SHR, PHR and PHY payload fields in FIG.

2(g)). A SHR may include a preamble and a SFD. It may include a PHR frame length field.

A RCM (or a frame including the above-described block allocation schedule information) including a HBS IE and/or a scheduling IE according to the present disclosure may have an UWB PPDU format (e.g., a format such as the examples of FIG. 3). The position and function of SYNC, SFD, PHR, STS and PHY payloads are the same as described by referring to FIG. 3.

The message of advertisement-poll (ADV-POLL), advertisement response (ADV-RESP), etc. may be included in the PHY payload field of a PPDU format. In addition, a RCM (or a frame including the above-described block allocation schedule information) including a HBS IE, etc. may also be included in the PHY payload field of a PPDU format.

Unlike the scheduling method in the existing UWB wireless network system, the present disclosure proposes a block-based scheduling method for a flexible time structure such as a hyper block, a block/round-based scheduling method for a general block structure, and a solicitation procedure for scheduling information. Through this, the controller may efficiently schedule the controlee, and the controlee may identify the blocks/rounds allocated/designated to it within the structure, thereby having the technical effect of efficiently performing transitions to and maintaining slot mode or active mode.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

[Industrial Applicability]

A method proposed in the present disclosure is described based on an example applied to an IEEE 802.15.4-based system, but it may be applied to various UWB wireless network or wireless communication systems other than an IEEE 802.15.4-based system.

**Claims**

**1.** A method performed by a first device in an ultra wideband (UWB) wireless network system, the method comprising:

generating, by the first device, a scheduling information element (IE) for scheduling in a block structure based on one or more ranging rounds; and
transmitting, to one or more second devices, a frame including the scheduling IE,

wherein the scheduling IE includes information indicating a type of ranging round-based scheduling and scheduling list information related to ranging round-based scheduling for each device.

2. The method of claim 1, wherein:
the scheduling list information includes first information indicating a number of ranging rounds scheduled by the scheduling IE.

3. The method of claim 2, wherein:

based on the first information not being included in the scheduling list information, the number of scheduled ranging rounds corresponds to one, and
the scheduling IE is defined to be transmitted by the first device for each ranging round.

4. The method of claim 1, wherein:

the scheduling list information includes second information in the form of a bitmap representing a pattern of scheduled ranging rounds, and
each bit constituting the bitmap corresponds to an index of each ranging round within the block structure.

5. The method of claim 4, wherein:

the scheduling list information includes third information indicating a length of the bitmap, and
the length of the bitmap is one of 8 bits, 16 bits, 32 bits, or 64 bits.

6. The method of claim 4, wherein:
based on a number of ranging rounds scheduled by the scheduling IE being smaller than a number of bits constituting the bitmap, bits exceeding the number of scheduled ranging rounds among the bits constituting the bitmap are ignored in an interpretation of the second information.

7. The method of claim 1, wherein:

the scheduling list information includes fourth information for an address of a device, and
based on address indexing based on map information related to an address of a device being applied, the fourth information is set as an index according to the address indexing.

8. The method of claim 7, wherein:
information indicating whether the address indexing is applied is included in the scheduling IE.

9. The method of claim 1, further comprising:

after transmission of the frame, receiving, from the second device, a frame including a specific IE for soliciting information related to the block structure; and
in response to the frame including the specific IE, transmitting, to the second device, one or more of information for the block structure or information for scheduling in the block structure.

10. The method of claim 1, wherein:

the block structure is configured based on a hyper block unit including one or more ranging blocks, and
based on each hyper block including a plurality of ranging blocks, durations of the plurality of ranging blocks are different.

11. The method of claim 10, wherein:
based on one ranging block including a plurality of ranging rounds, durations of the plurality of ranging rounds are identical.

12. The method of claim 1, wherein the frame including the scheduling IE is transmitted in one or more of:

a part or all of a ranging control message (RCM) within the block structure;

each ranging round within the block structure; or
ranging rounds according to a number of ranging rounds scheduled by the scheduling IE within the block structure.

**13.** The method of claim 1, wherein:

the first device corresponds to a controller, and
the second device corresponds to a controlee

**14.** A first device apparatus in an ultra-wideband (UWB) wireless network system, the apparatus comprising:

one or more transceivers; and
one or more processors connected with the one or more transceivers,
wherein the one or more processors are configured to:

generate, by the first device, a scheduling information element (IE) for scheduling in a block structure based on one or more ranging rounds; and
transmit, to one or more second devices, a frame including the scheduling IE,
wherein the scheduling IE includes information indicating a type of ranging round-based scheduling and scheduling list information related to ranging round-based scheduling for each device.

**15.** A method performed by a second device in an ultra wideband (UWB) wireless network system, the method comprising:

receiving, from a first device, a scheduling information element (IE) for scheduling in a block structure based on one or more ranging rounds; and
identifying a ranging round assigned to the second device within the block structure, based on the scheduling IE,
wherein the scheduling IE includes information indicating a type of ranging round-based scheduling and scheduling list information related to ranging round-based scheduling for each device.

**16.** A second device apparatus in an ultra-wideband (UWB) wireless network system, the apparatus comprising:

one or more transceivers; and
one or more processors connected with the one or more transceivers,
wherein the one or more processors are configured to:

receive, from a first device, a scheduling information element (IE) for scheduling in a block structure based on one or more ranging rounds; and
identify a ranging round assigned to the second device within the block structure, based on the scheduling IE,
wherein the scheduling IE includes information indicating a type of ranging round-based scheduling and scheduling list information related to ranging round-based scheduling for each device.

**17.** A processing device configured to control a user equipment in an ultra-wideband (UWB) wireless network system, the processing device comprising:

at least one processor; and
at least one computer memory operatively coupled to the at least one processor and storing instructions for performing a method according to any one of claims 1 to 13 upon being executed by the at least one processor.

**18.** At least one non-transitory computer readable medium storing at least one instruction, wherein:
the at least one instruction executed by at least one processor controls a device to performs a method according to any one of claims 1 to 13 in an ultra-wideband (UWB) wireless network system.

**FIG.1**

FIG.2

EP 4 712 626 A1

# FIG.3

(a)

| SYNC | SFD | PHR | PHY payload field |
|------|-----|-----|-------------------|

(b)

| SYNC | SFD | STS | PHR | PHY payload field |
|------|-----|-----|-----|-------------------|

(c)

| SYNC | SFD | PHR | PHY payload field | STS |
|------|-----|-----|-------------------|-----|

(d)

| SYNC | SFD | STS |
|------|-----|-----|

# FIG.4

(a)

(b)

(c)

# FIG.5

(a)

| bits: 0 | 1 | 2 | 3 | 4 | 5 | 6-7 | 8 | 9-15 | octets: variable |
|---|---|---|---|---|---|---|---|---|---|
| reply time present | round-trip time present | TOF present | AOA azimuth present | AOA elevation present | AOA FOM present | address size specifier | deferred mode | RMI list legnth | RMI list |

| octets: 0/4 | 0/4 | 0/4 | 0/2 | 0/1 | 0/2 | 0/1 | 0/2/8 |
|---|---|---|---|---|---|---|---|
| RX-to-TX reply time | TX-to-RX round-trip time | TOF | AOA azimuth | AOA azimuth FOM | AOA elevation | AOA elevation FOM | address |

(b)

| bits: 0 | 1 | 2 | 3-7 | octets: 0/4 | 0/3 | 0/1 | 0/1 | 0/2 |
|---|---|---|---|---|---|---|---|---|
| CCIP | DDP | PSP | channel number | CCI | DPS duration | TX preamble code | RX preamble code | PSR |

(c)

| bits: 0 | 1 | 2 | 3 | 4 | 5-6 | 7 | octets: 0/1 | variable |
|---|---|---|---|---|---|---|---|---|
| reply time request | round-trip time request | TOF request | AOA azimuth request | AOA elevation request | ranging control information | address size | RRMC address list legnth | RRMC Djemfpt list |

(d)

| bits: 0-1 | 2-7 | octets: variable |
|---|---|---|
| address size specifier | RRTI list legnth | RRTI list |

| octets: 4 | 0/2/8 |
|---|---|
| RX-to-TX reply time | address |

EP 4 712 626 A1

## FIG.6

initiator
next higher layer

initiator
MAC

responder
MAC

responder
next higher layer

MCPS-DATA.request

{AckTx, Ranging,
RRMC IE(0) to
request reply time}

MAC data (AR=1)

{Ranging, RRMC IE}

ACK

{Ranging}

MCPS-DATA.confirm

{local values of
TxRangingCounter and
RxRangingCounter}

MCPS-DATA.indication

{local values of
RxRangingCounter and
TxRangingCounter, and
RRMC IE}

MCPS-DATA.request

{RMI IE including reply time}

MAC data

{RMI IE}

MCPS-DATA.indication

{RMI IE}

## FIG.7

initiator
next higher layer

initiator
MAC

responder
MAC

responder
next higher layer

MCPS-DATA.request

{RRTN IE}

MAC data

{RPRT IE}

MCPS-DATA.indication

{RRTN IE}

MCPS-DATA.request

{Ranging,
RRMC IE(0) to
request reply time}

MAC data

{Ranging, RRMC IE}

MCPS-DATA.indication

{reporting local value of
RxRangingCounter
and RRMC IE}

MCPS-DATA.confirm

{local value of
TxRangingCounter}

MCPS-DATA.request

{Ranging, RequestRrtiTx
set to insert RRTI IE}

MAC data

{RRTI IE}

MCPS-DATA.indication

{local value of
TxRangingCounter,
RRMC IE and RRTI IE}

MCPS-DATA.confirm

{reporting local value of
RxRangingCounter}

## FIG.8

initiator next higher layer | initiator MAC | responder MAC | responder next higher layer

MCPS-DATA.request
{IEs for coordinating configuration}

MAC data

MCPS-DATA.indication

MLME-STS.request

MLME-STS.request

MCPS-DATA.request

SP3 packet

MCPS-DATA.indication

MCPS-DATA.confirm
{local value of TxRangingCounter}

MCPS-DATA.request

SP3 packet

MCPS-DATA.indication
{local value of TxRangingCounter}

MCPS-DATA.confirm

MLME-STS.request

MLME-SET.request

## FIG.9

initiator next higher layer | initiator MAC | responder MAC | responder next higher layer

MCPS-DATA.request
{AckTx, Ranging, RRMC IE(2)}

MAC data (including AR)
{Ranging, RRMC IE}

ACK
{Ranging}

MCPS-DATA.indication

MCPS-DATA.confirm
{TxRangingCounter and RxRangingCounter}

{RxRangingCounter, TxRangingCounter, and RRMC IE}

MCPS-DATA.request
{AckTx, Ranging, RRMC IE(3) to request reply time and round-trip time}

MAC data (including AR)
{RRMC IE}

ACK
{Ranging}

MCPS-DATA.confirm
{TxRangingCounter and RxRangingCounter}

MCPS-DATA.indication
{RRMC IE}

MCPS-DATA.request
{RMI IE including reply time and round-trip time}

MAC data
{RMI IE}

MCPS-DATA.indication
{RMI IE}

MCPS-DATA.request
{RMI IE including reply time}

MAC data
{RMI IE}

MCPS-DATA.indication
{RMI IE}

41

# FIG.10

initiator next higher layer    initiator MAC    responder MAC    responder next higher layer

MCPS-DATA.request
{Ranging, RRMC IE(2)}

MAC data
{Ranging, RRMC IE}

MCPS-DATA.indication
{RxRangingCounter and RRMC IE}

MCPS-DATA.confirm
{TxRangingCounter}

MCPS-DATA.request
{Ranging, RRMC IE(3) to request reply time and round-trip time }

MAC data
{Ranging, RRMC IE}

MCPS-DATA.confirm
{TxRangingCounter}

MCPS-DATA.indication
{RxRangingCounter, RRMC IE}

MCPS-DATA.request
{RequestRrtiTx set to insert RRTI IE, and RMI IE including round-trip time}

MAC data
{Ranging, RMI IE, and RRTI IE}

MCPS-DATA.indication
{local value of RxRangingCounter, RxRangingCounter, RRIT IE, and RMI IE}

MCPS-DATA.confirm
{TxRangingCounter}

**FIG.11**

controlee

initiator

controller

responder

ranging control message

ranging initiation message

ranging response message

(b)

controlee

responder

controller

initiator

ranging control message

ranging initiation message

ranging response message

(a)

# FIG.12

(a)

| bits:<br>0-1 | 2-3 | 4-5 | 6 | 7 | 8 | 9-14 | 15 | octets:<br>1 | 0/3 | 0/1 | 0/2 | 0/4 |
|---|---|---|---|---|---|---|---|---|---|---|---|---|
| multi-<br>node<br>mode | ranging<br>round<br>usage | STS<br>packet<br>config | schedule<br>mode | deferred<br>mode | time<br>structure<br>indicator | RCM<br>validity<br>round | MMRCR | content<br>control | RBD | RRD | RSD | SID |

(b)

| bits:<br>0 | 1 | 2-7 | octets:<br>variable |
|---|---|---|---|
| SIU | address<br>size | RDM<br>list<br>legnth | RDM<br>list |

| bits:<br>0 | 1-7 | octets:<br>2/8 |
|---|---|---|
| ranging<br>role | ranging<br>slot<br>index | address |

(c)

| octets:<br>1 | 3 | 1/0 | 2/0 |
|---|---|---|---|
| relative<br>ranging block<br>index | update<br>block duration | update<br>ranging round<br>duration | update<br>slot duration |

(d)

| octets:<br>2 | bits:<br>0 | 1-15 | octets:<br>2 |
|---|---|---|---|
| ranging<br>block<br>index | hopping<br>mode | round<br>index | transmission<br>offset |

(e)

| bits:<br>0-1 | 2-3 | 4 | 5 | 6 | 7 | octets:<br>0/2/8 | 0/2/8 |
|---|---|---|---|---|---|---|---|
| requestor<br>address<br>size<br>specifier | provider<br>address<br>size<br>specifier | RAOA | RRT | RRTT | RTOF | requestor<br>address | provider<br>address |

EP 4 712 626 A1

## FIG.13

(a)

ranging block

| ranging round 0 | ranging round 1 | ranging round 2 | ranging round 3 | ... | ranging round N-1 |

| ranging slot 0 | ranging slot 1 | ranging slot 2 | ... | ranging slot M-1 |

(b)

ranging round

| ranging slot | ranging slot | | ... | | | | ... | |

ranging control phase

ranging phase

measurement report phase

# FIG.14

FIG.15

EP 4 712 626 A1

# FIG.16

# FIG.17

EP 4 712 626 A1

# FIG.18

EP 4 712 626 A1

**FIG.19**

EP 4 712 626 A1

| Bits: 0-3 | 4-6 | 7 | 8 | 9-15 | Octets: variable |
|---|---|---|---|---|---|
| Scheduling List Length | Scheduling List Type | Address Size | Receiver Address Present | Reserved | Scheduling List |

# FIG.20

(a)

| Octets: 1 | 2/8 |
|---|---|
| Slot Index | Sender Address |

(b)

| Octets: 2/8 |
|---|
| Sender Address |

(c)

| Bits: 0-1 | 2 | 3-7 | Octets: variable | 2/8 | 0/2/8 | 0/1 |
|---|---|---|---|---|---|---|
| Scheduling Bitmap Length | Bitmap Offset Present | Reserved | Scheduling Bitmap | Sender Address | Receiver Address | Bitmap Offset |

(d)

| Bits: 0-6 | 7-10 | 11-15 | Octets: 2/8 | 0/2/8 |
|---|---|---|---|---|
| Start Slot Offset | Scheduling Step | Scheduling Repetition | Sender Address | Receiver Address |

(e)

| Bits: 0-6 | 7-10 | 11-15 | Octets: 2/8 | 0/2/8 | 1 | 1 | 1 |
|---|---|---|---|---|---|---|---|
| Start Slot Offset | Scheduling Step | Scheduling Repetition | Sender Address | Receiver Address | Sequence Index | Number of Gaps | Sequence Repetition |

**FIG.21**

(a)

ranging block 0 | ranging block 1 | ranging block 2

| ranging round 0 | ranging round 1 | ranging round 2 | ranging round 0 | ranging round 1 | ranging round 2 | ranging round 0 | ranging round 1 | ranging round 2 |

DL-TDOA　　　　DL-TDOA　　　　DL-TDOA

(b)

ranging block 0 | ranging block 1 | ranging block 2

| ranging round 0 | ranging round 1 | ranging round 2 | ranging round 0 | ranging round 1 | ranging round 2 | ranging round 0 | ranging round 1 | ranging round 2 |

DL-TDOA　　　ranging and data transmission　　　contention

EP 4 712 626 A1

**FIG.22**

Generate a scheduling IE
for scheduling in a block structure
based on one or more ranging rounds — S2210

Transmit a frame
including the scheduling IE — S2220

**FIG.23**

Receive a frame including
a scheduling IE for scheduling
in a block structure based on one or
more ranging rounds — S2310

Identify a ranging round assigned
within the block structure based on
the scheduling IE — S2320

**FIG.24**

(a)

hyper block K-1 | hyper block K | hyper block K+1

ranging block 0 | ranging block 1 | ranging block 2 | ranging block 0 | ranging block 1 | ranging block 2 | ranging block 0 | ranging block 1 | ranging block 2

ranging round 0 | ranging round 1 | ranging round 0 | ranging round 1 | ranging round 2 | ... | ranging round 5 | ranging round 0

ranging block 0 | ranging block 1 | ranging block 2

(b)

hyper block duration

RCM | RCM | RCM | RCM

ranging block 0 | ranging block 1 | ranging block 2 | ranging block 3 | ranging block 0

block duration | block duration | block duration | block duration

EP 4 712 626 A1

**FIG.25**

(a)

| Octets: 2 | 1 | 1 | Variable |
|---|---|---|---|
| Hyper Block Index | Content Control | Block Description List Length | Block Description List |

(b)

| Bits: 2 | 1 | 1 | 4 |
|---|---|---|---|
| Block Duration Unit | Round Duration Presence | Slot Duration Presence | Reserved |

(c)

| Octets: 1 | 1/2/3 | 0/1 | 0/1 |
|---|---|---|---|
| Block Index | Block Duration | Round Duration | Slot Duration |

**FIG.26**

| Bits:<br>0-1 | 2-7 | Octets:<br>variable | 2/8 |
|---|---|---|---|
| Block Scheduling<br>Bitmap Length | Reserved | Block Scheduling<br>Bitmap | Sender<br>Address |

# FIG.27

| Bits: 0-3 | 4-6 | 7 | 8 | 9 | 10-15 | Octets: variable |
|---|---|---|---|---|---|---|
| Scheduling List Length | Scheduling List Type | Address Size | Receiver Address Present | Address Index | Reserved | Scheduling List |

EP 4 712 626 A1

# FIG.28

EP 4 712 626 A1

(a)

| Octets:<br>1 | 1 |
|---|---|
| Slot Index | Sender Address Index |

(b)

| Bits:<br>0-1 | 2 | 3-7 | Octets:<br>variable | 1 | 0/2/8 | 0/1 |
|---|---|---|---|---|---|---|
| Scheduling<br>Bitmap Length | Bitmap<br>Offset Present | Reserved | Scheduling<br>Bitmap | Sender<br>Address Index | Receiver<br>Address | Bitmap<br>Offset |

# FIG.29

FIG.30

EP 4 712 626 A1

Hyper Block K-1 | Hyper Block K | Hyper Block K+1

Block 0 | Block 1 | Block 2 | Block 0 | Block 1 | Block 2 | Block 0 | Block 1 | Block 2

Hyper Block K

Block 0 | Block 1 | Block 2

Round 0 | Round 1 | Round 0 | Round 1 | Round 2 | ..... | Round 5 | Round 0

**HBS IE**

| Hyper Block Index | Block Duration Units | Block Duration Presence | Round Duration Presence | Slot Duration Presence | Block Description List Length | Block Index | Block Duration | Round Duration | Block Index | Block Duration | Round Duration | Block Index | Block Duration | Round Duration |
|---|---|---|---|---|---|---|---|---|---|---|---|---|---|---|
| 0 | 0 | 1 | 0 | 3 | 0 | 2 | 3 | 1 | 5 | 2 | 2 | 1 | 5 |

**Scheduling IE (Type 5)**

| Scheduling List Length | Scheduling List Type | Address Size | Receiver Address Present | Address Index | Scheduling List |
|---|---|---|---|---|---|
| 5 | 5 | 0 | 0 | 0 | – |

| Hyper Block Scheduling Bitmap Length | Hyper Block Scheduling Bitmap | Sender Address |
|---|---|---|
| 0 | 11000000 | AA:AA |
| 0 | 11100000 | BB:BB |
| 0 | 01000000 | CC:CC |
| 0 | 01000000 | DD:DD |
| 0 | 01100000 | EE:EE |

## FIG.31

| Size | Octets:<br>2 | 1 | 1 | Variable |
|---|---|---|---|---|
| Field | Hyper Block<br>Index | Content Control | Block Description<br>List Length | Block<br>Description List |
| Value | 0 | 00100000 | 3 | |

| Size | Octets:<br>1 | 1/2/3 | 0/1 |
|---|---|---|---|
| Field | Block<br>Index | Block<br>Duration | Round<br>Duration |
| Value | 0 | 2 | 3 |
| | 1 | 5 | 2 |
| | 2 | 1 | 5 |

| Size | Bits:<br>0-3 | 4-6 | 7 | 8 | 9 | 10-15 | Octets:<br>variable |
|---|---|---|---|---|---|---|---|
| Field | Scheduling<br>List Length | Scheduling<br>List Type | Address Size | Receiver<br>Address Presence | Address<br>Index | Reserved | Scheduling<br>List |
| Value | 5 | 5 | 0 | 0 | 0 | reserved | |

| Size | Bits:<br>0-1 | 2-7 | Octets:<br>variable | 2/8 |
|---|---|---|---|---|
| Field | Hyper Block Scheduling Bitmap Length | Reserved | Hyper Block Scheduling Bitmap | Sender Address |
| Value | 0 | 0000000 | 11000000 | AA : AA |
| | 0 | 0000000 | 11100000 | BB : BB |
| | 0 | 0000000 | 01000000 | CC : CC |
| | 0 | 0000000 | 01000000 | DD : DD |
| | 0 | 0000000 | 01100000 | EE :EE |

EP 4 712 626 A1

# FIG.32

EP 4 712 626 A1

## FIG.33

| Bits: 0-1 | 2-7 | Octets: 1 | Octets: variable | 2/8 |
|---|---|---|---|---|
| Block Scheduling Bitmap Length | Reserved | Scheduled Block Length | Block Scheduling Bitmap | Sender Address |

## FIG.34

| Bits: 0-1 | 2-7 | Octets: variable | 2/8 |
|---|---|---|---|
| Block Scheduling Bitmap Length | Reserved | Block Scheduling Bitmap | Sender Address |

## FIG.35

| Bits: 0-1 | 2-7 | Octets: 1 | Octets: variable | 2/8 |
|---|---|---|---|---|
| Round Scheduling Bitmap Length | Reserved | Scheduled Round Length | Round Scheduling Bitmap | Sender Address |

## FIG.36

| Bits: 0-1 | 2-7 | Octets: variable | 2/8 |
|---|---|---|---|
| Round Scheduling Bitmap Length | Reserved | Round Scheduling Bitmap | Sender Address |

## FIG.37

(a)

| Bits: 0-1 | 2-7 | Octet: 1 | Octets: variable | 0/2/8 | 0/1 |
|---|---|---|---|---|---|
| Block Scheduling Bitmap Length | Reserved | Scheduled Block Length | Block Scheduling Bitmap | Sender Address | Sender Address Index |

(b)

| Bits: 0-1 | 2-7 | Octet: 1 | Octets: variable | 0/2/8 | 0/1 |
|---|---|---|---|---|---|
| Round Scheduling Bitmap Length | Reserved | Scheduled Round Length | Round Scheduling Bitmap | Sender Address | Sender Address Index |

# FIG.38

| Scheduling IE (Type 5) | Scheduling List Length | Scheduling List Type | Address size | Receiver Address Present | Scheduling List |
|---|---|---|---|---|---|
| | 5 | 5 | 0 | 0 | - |

**Scheduling List Element**

| Block Scheduling Bitmap Length | Block Scheduling Bitmap | Sender Address |
|---|---|---|
| 0 | 10000000 | AA:AA |
| 0 | 10000000 | BB:BB |
| 0 | 10000000 | CC:CC |
| 0 | 10000000 | DD:DD |
| 0 | 10000000 | EE:EE |

**Scheduling List Element**

| Block Scheduling Bitmap Length | Block Scheduling Bitmap | Sender Address |
|---|---|---|
| 0 | 10000000 | AA:AA |
| 0 | 10000000 | BB:BB |

**Scheduling List Element**

| Block Scheduling Bitmap Length | Block Scheduling Bitmap | Sender Address |
|---|---|---|
| 0 | 10000000 | BB:BB |
| 0 | 10000000 | EE:EE |

Block Scheduling Info

| Block 0 | Block 1 | Block 2 | Block 3 | Block 4 | Block 5 | Block 6 | Block 7 | Block 8 |

Controlee 1 (AA:AA) — Active / Active / Active

Controlee 2 (BB:BB) — Active / Active / Active

Controlee 3 (CC:CC) — Active / Active / Active

Controlee 4 (DD:DD) — Active / Active / Active

Controlee 5 (EE:EE) — Active / Active / Active

# FIG.39

| Scheduling IE (Type 5) | Scheduling List Length | Scheduling List Type | Address size | Receiver Address Present | Scheduling List |
|---|---|---|---|---|---|
| | 5 | 5 | 0 | 0 | - |

**Scheduling List Element**

| Block Scheduling Bitmap Length | Block Scheduling Bitmap | Scheduled Block Length | Sender Address |
|---|---|---|---|
| 0 | 11000000 | 3 | AA:AA |
| 0 | 11100000 | 3 | BB:BB |
| 0 | 01000000 | 3 | CC:CC |
| 0 | 01000000 | 3 | DD:DD |
| 0 | 01100000 | 3 | EE:EE |

Block Scheduling Info

| Block 0 | Block 1 | Block 2 | Block 3 | Block 4 | Block 5 | Block 6 | Block 7 | Block 8 |
|---|---|---|---|---|---|---|---|---|

Controlee 1 (AA:AA)

Active | Active | Active

Controlee 2 (BB:BB)

Active | Active | Active

Controlee 3 (CC:CC)

Active | Active | Active

Controlee 4 (DD:DD)

Active | Active | Active

Controlee 5 (EE:EE)

Active | Active | Active

# FIG.40

| Scheduling IE (Type 6) | Scheduling List Length | Scheduling List Type | Address size | Receiver Address Present | Scheduling List |
|---|---|---|---|---|---|
| | 5 | **6** | 0 | 0 | - |

**Scheduling List Element**

| Round Scheduling Bitmap Length | Round Scheduling Bitmap | Sender Address |
|---|---|---|
| 0 | 10000000 | AA:AA |
| 0 | 10000000 | BB:BB |
| 0 | 10000000 | CC:CC |
| 0 | 10000000 | DD:DD |
| 0 | 10000000 | EE:EE |

**Scheduling List Element**

| Round Scheduling Bitmap Length | Round Scheduling Bitmap | Sender Address |
|---|---|---|
| 0 | 10000000 | AA:AA |
| 0 | 10000000 | BB:BB |

**Scheduling List Element**

| Round Scheduling Bitmap Length | Round Scheduling Bitmap | Sender Address |
|---|---|---|
| 0 | 10000000 | BB:BB |
| 0 | 10000000 | EE:EE |

Round Scheduling Info

Round 0 | Round 1 | Round 2 | Round 3 | Round 4 | Round 5 | Round 6 | Round 7 | Round 8

Controlee 1 (AA:AA) — Active | Active | Active

Controlee 2 (BB:BB) — Active | Active | Active

Controlee 3 (CC:CC) — Active | Active | Active

Controlee 4 (DD:DD) — Active | Active | Active

Controlee 5 (EE:EE) — Active | Active | Active

67

# FIG.41

| Scheduling IE (Type 6) | Scheduling List Length | Scheduling List Type | Address size | Receiver Address Present | Scheduling List |
|---|---|---|---|---|---|
| | 5 | 6 | 0 | 0 | - |

**Scheduling List Element**

| Round Scheduling Bitmap Length | Round Scheduling Bitmap | Scheduled Round Length | Sender Address |
|---|---|---|---|
| 0 | 11000000 | 3 | AA:AA |
| 0 | 11100000 | 3 | BB:BB |
| 0 | 01000000 | 3 | CC:CC |
| 0 | 01000000 | 3 | DD:DD |
| 0 | 01100000 | 3 | EE:EE |

# FIG.42

## INTERNATIONAL SEARCH REPORT

| International application No. |
| --- |
| **PCT/KR2024/006378** |

**A. CLASSIFICATION OF SUBJECT MATTER**

**H04W 72/0446**(2023.01)i; **H04B 1/7163**(2011.01)i; **H04W 4/80**(2018.01)i

According to International Patent Classification (IPC) or to both national classification and IPC

**B. FIELDS SEARCHED**

Minimum documentation searched (classification system followed by classification symbols)

H04W 72/0446(2023.01); G01S 13/02(2006.01); G01S 5/02(2010.01); G01S 5/14(2006.01); H04W 64/00(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: ranging round based scheduling type, scheduling list, scheduling IE, UWB

**C. DOCUMENTS CONSIDERED TO BE RELEVANT**

| Category* | Citation of document, with indication, where appropriate, of the relevant passages | Relevant to claim No. |
| --- | --- | --- |
| A | WU, Kuan et al. Improvements on scheduling IE design in 802.15.4ab. IEEE 15-22-0568-01-04ab. 11 November 2022.<br>See slides 4-11. | 1-18 |
| A | YOON, Kangjin et al. Text for Scheduling IE. IEEE 15-23-0062-03-04ab. 16 March 2023.<br>See pages 2-6. | 1-18 |
| A | KABBINALE, Aniruddh Rao et al. Control and scheduling information for UWB sensing. IEEE 15-23-0136-01-04ab. 13 March 2023.<br>See slides 4-8. | 1-18 |
| A | US 2020-0200862 A1 (SAMSUNG ELECTRONICS CO., LTD.) 25 June 2020 (2020-06-25)<br>See paragraphs [0169]-[0174]; and figures 14-16. | 1-18 |
| A | US 2021-0173066 A1 (SAMSUNG ELECTRONICS CO., LTD.) 10 June 2021 (2021-06-10)<br>See paragraphs [0073]-[0091]; and figures 4-5. | 1-18 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **26 August 2024** | **26 August 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/006378**

| Patent document cited in search report | | | Publication date (day/month/year) | Patent family member(s) | | | Publication date (day/month/year) |
|---|---|---|---|---|---|---|---|
| US | 2020-0200862 | A1 | 25 June 2020 | CN | 113228761 | A | 06 August 2021 |
| | | | | EP | 3868162 | A1 | 25 August 2021 |
| | | | | KR | 10-2021-0095131 | A | 30 July 2021 |
| | | | | US | 11536798 | B2 | 27 December 2022 |
| | | | | WO | 2020-130727 | A1 | 25 June 2020 |
| US | 2021-0173066 | A1 | 10 June 2021 | CN | 114599993 | A | 07 June 2022 |
| | | | | EP | 4018224 | A1 | 29 June 2022 |
| | | | | KR | 10-2021-0071540 | A | 16 June 2021 |
| | | | | US | 11340341 | B2 | 24 May 2022 |
| | | | | US | 11740343 | B2 | 29 August 2023 |
| | | | | US | 2022-0276365 | A1 | 01 September 2022 |
| | | | | WO | 2021-112539 | A1 | 10 June 2021 |

Form PCT/ISA/210 (patent family annex) (July 2022)